# EUROPÄISCHE PATENTSCHRIFT

(11) **EP 4 367 834 B1**
(45) Veröffentlichungstag und Bekanntmachung des Hinweises auf die Patenterteilung: **22.07.2026**
(21) Anmeldenummer: 22738359.3
(22) Anmeldetag: 21.06.2022
(51) Int. Cl.: H04L 9/40, H04L 12/40, H04L 12/46

(54) **VORRICHTUNG ZUR ABGESICHERTEN KOMMUNIKATION ZWISCHEN STEUERGERÄTEN IN EINEM FAHRZEUG, ELEKTRONISCHE VERARBEITUNGSEINHEIT UND FAHRZEUG**
APPARATUS FOR SECURED COMMUNICATION BETWEEN CONTROL DEVICES IN A VEHICLE, ELECTRONIC PROCESSING UNIT AND VEHICLE
APPAREIL DE COMMUNICATION SÉCURISÉE ENTRE DES DISPOSITIFS DE COMMANDE DANS UN VÉHICULE, UNITÉ DE TRAITEMENT ÉLECTRONIQUE ET VÉHICULE

(30) Priorität: 07.07.2021 DE 102021117500
(43) Veröffentlichungstag der Anmeldung: 15.05.2024
(73) Patentinhaber: ZF CV Systems Global GmbH, 3006 Bern (CH)
(72) Erfinder: REHM, Florian, 30974 Wennigsen (DE); URBAN-SEELMANN, Christian, 31535 Neustadt (DE)
(74) Vertreter: Schäferjohann, Volker
(86) Internationale Anmeldenummer: PCT/EP2022/066857
(87) Internationale Veröffentlichungsnummer: WO 2023/280563

(56) Entgegenhaltungen:
- DE-A1- 102011 084 254
- DE-A1- 102017 202 022
- US-A1- 2018 205 703

## Beschreibung

Die Erfindung betrifft das technische Gebiet der Cyber Security bei Fahrzeugen, insbesondere bei Nutzfahrzeugen. **In** Fahrzeugen werden immer mehr elektronische Komponenten integriert, die untereinander Nachrichten austauschen können. Dazu werden verschiedene Kommunikationsnetzwerke gebildet, die mit Gateways versehen werden, die die verschiedenen Kommunikationsnetzwerke untereinander verbinden. Sie dienen dazu die Formatwandlung durchzuführen, damit Nachrichten im Format des einen Kommunikationsnetzwerks in das Format des anderen Kommunikationsnetzwerks umgewandelt werden und umgekehrt, damit die Nachrichten von den elektronischen Komponenten in dem einen Kommunikationsnetzwerk auch von den elektronischen Komponenten in dem anderen Kommunikationsnetzwerk verstanden werden und umgekehrt. Zum Teil werden aber auch Steuergeräte, die den Kommunikationsbus sehr stark auslasten in einem separaten Zweig vernetzt, obwohl das gleiche Bussystem verwendet wird, und für diesen Zweig keine Formatumwandlung erforderlich ist. Mit dem Begriff "Cyber Security" sollen dabei verschiedene Aspekte der Datensicherheit im "digitalen Zeitalter" angesprochen werden. Dies beinhaltet unter anderem den Aspekt der Netzwerksicherheit. Hier kommt es insbesondere darauf an Angriffe von außen und innen auf das Kommunikationsnetzwerk abzuwehren. Dabei sind die Angriffsmöglichkeiten so vielfältig, wie die Netzwerke selbst.

Geht es bei Angriffen auf stationäre Computernetzwerke häufig darum die dort gespeicherten, vertraulichen Daten zu schützen und das Einschleusen von Schadsoftware zu unterbinden, geht es bei den Angriffen auf Kommunikationsnetzwerke im Fahrzeug besonders darum das Einschleusen von gefälschten Steuerbefehlen und gefälschten Diagnosebefehlen zu unterbinden. Wie anfällig Kommunikationsnetzwerke im Fahrzeug sein können, wurde besonders eindrücklich von einer Gruppe von Hackern demonstriert, die im Jahr 2015 einen Hackerangriff auf ein Fahrzeug im laufenden Betrieb des Fahrzeuges durchführten. Bei dieser Demonstration wurden gefälschte Steuerbefehle eingeschleust, mit denen ein BCM-Modul, entsprechend Body Control Modul, des Fahrzeuges manipuliert wurde. Dabei wurden während der Fahrt die Fensterheber angesteuert und es wurden die Scheiben bei voller Fahrt heruntergelassen. Ebenfalls wurden auch Schlimmere Angriffe durchgeführt. So wurden die Bremsen deaktiviert, sowie die Klimaanlage, das Kombiinstrument sowie die Infotainment-Anlage, und die Lenkung ferngesteuert. Es gibt daher Bestrebungen die Kommunikationsnetzwerke im Fahrzeug abzusichern.

Aus der US 2013 227 648 A1 ist es bekannt ein Gateway in einem Fahrzeug vorzusehen, um Angriffe von außen abzuwehren. Über dieses Gateway läuft die Kommunikation nach außen. Dieses Gateway ist mit einer Firewall ausgestattet. Die Firewall kann ein Authentifizierungsmittel sein, das eine Public-Key-Infrastruktur (PKI) verwendet, und den Kommunikationspartner z.B. auf der Grundlage eines symmetrischen oder asymmetrischen Schlüsselaustausches authentifiziert. Die Firewall kann die Übertragung von schädlichen Informationen blockieren, die nicht authentifiziert sind, und kann eine Warnmeldung ausgeben, wenn schädliche Informationen übertragen wurden.

Aus der US 2019 268 376 A1 ist es bekannt ein Gateway mit Firewall für den externen Datenverkehr und ein Gateway mit Firewall für den internen Datenverkehr vorzusehen. Die Firewall des externen Gateways sichert den Datenverkehr mit Kommunikationspartnern außerhalb des Fahrzeuges ab. Alle Nachrichten, die von außen kommen, werden überprüft und an das interne Gateway weitergeleitet. Alle Nachrichten, die von Steuergeräten im Fahrzeug kommen und nach außen gesendet werden sollen, werden ebenfalls von der Firewall des externen Gateways überprüft. Das interne Gateway kann die vom externen Gateway übertragenen Informationen über ein internes Netzwerk an ein internes elektronisches Steuergerät übermitteln oder die Kommunikation zwischen verschiedenen internen elektronischen Steuergeräten unterstützen. Das interne Gateway wird in diesem Fall nur zur Sicherheitsüberprüfung benutzt.

Aus der US 2014 226 673 A1 ist es bekannt an das bordeigene Gateway-Gerät einen Anschluss für einen Werkstatt-Diagnosetester vorzusehen. Dieses Gateway-Gerät dient auch dazu zum Zeitpunkt des Herstellens der Verbindung zwischen dem Diagnosetester und dem Fahrzeug die Authentifizierung des Diagnosetesters vorzunehmen und bei erfolgreicher Authentifizierung die Kommunikation zwischen dem Diagnosetester und den bordeigenen Geräten zu übertragen. Dieses Gateway-Gerät ist ebenfalls mit einer Firewall ausgestattet.

Die Art der Fälschung von Nachrichten, die Steuerbefehle oder Sensordaten enthalten, ist im Fahrzeugbereich sehr eng mit dem Kommunikationsprotokoll verknüpft, das für die Übertragung solcher Nachrichten benutzt wird. Das mit Abstand am häufigsten angewendete Kommunikationsprotokoll, das in Fahrzeugen eingesetzt wird, ist das CAN-Bus-Kommunikationsprotokoll. Der CAN-Bus, entsprechend Controller Area Network, findet schon seit 1991 Verbreitung in Fahrzeugen. Das CAN-Bus-Kommunikationsprotokoll wurde 1994 standardisiert, und die ISO-Norm hat die Nummer ISO 11898. Später wurden weitere Varianten dieses Bussystems standardisiert. Dieses CAN-Bus-Kommunikationsprotokoll ist aber anfällig für Angriffe, die auf dem Einschleusen von Nachrichten beruhen. Solche Angriffe sind auch unter dem Begriff "Spoofing" bekannt. Der Begriff "Spoofing" bezeichnet das Fälschen von Absenderadressen zum Verschleiern der Herkunft von Paketen.

Allerdings werden beim CAN-Bus-Kommunikationsprotokoll keine Absenderadressen gesendet. Das Einschleusen von Nachrichten wäre allerdings möglich, wenn es dem Angreifer gelingt logischen Zugang zur Busleitung zu bekommen. Beim CAN-Bus wird als physikalisches Übertragungsmedium eine verdrillte Zweidrahtleitung ohne Abschirmung verwendet. Wenn es einem Angreifer gelingt sein manipuliertes Gerät an diese Busleitung anzuschließen, so ist es leicht zusätzliche (manipulierte) Nachrichten einzuschleusen. Das wäre aber auch möglich, wenn wie bei der Demonstration im Jahr 2015 gezeigt, über die sogenannte Luftschnittstelle die Nachrichten eingeschleust werden. Das ist ein On-Board-Kommunikationsmodul, das für die Kommunikation nach außen benutzt wird. Es kann sich um ein 5G-, LTE-, oder WIFI-Modem, etc. handeln. Typischerweise wird die Luftschnittstelle an ein Gateway-Modul angeschlossen, das mit dem einen oder mehreren Fahrzeug-Kommunikationsbussen verbunden ist.

Dieser Anfälligkeit des CAN-Bussystems wurde in jüngerer Vergangenheit durch die Entwicklung abgesicherter CAN-Transceiver begegnet.

Aus der EP 3 148 154 B1 ist ein solcher CAN-Transceiver bekannt. Dabei wird ein Überwachungsmodul eingesetzt, mit dem überprüft wird, ob der Identifizierer einer empfangenen CAN-Botschaft mit einem für die Busstation reservierten Identifizierer übereinstimmt. Dadurch wird überprüft, ob die bei dem CAN-Bus gültige Eindeutigkeitsregel für CAN-Botschaften-Identifizierer verletzt wird. Wenn die Verletzung der Eindeutigkeitsregel festgestellt wurde, wird auf einen Angriff auf das Bussystem geschlossen und es wird die empfangene CAN-Botschaft, die die Eindeutigkeitsregel verletzt, noch während des Empfangs für ungültig erklärt. Dies geschieht durch Senden eines Error Flags in dem End of Frame-Feld der empfangenen CAN-Botschaft. Wenn die anderen Busteilnehmerstationen das Error Flag erkennen, müssen sie die empfangene Nachricht als ungültig verwerfen. So kommt es nicht zur Ausführung des etwaigen in der Nachricht enthaltenen Steuerbefehls und diese Nachricht kann deshalb keinen Schaden mehr anrichten.

Aus der WO 2020 187 985 A1 ist eine Erweiterung für abgesicherte CAN-Transceiver bekannt, in der noch andere Gegenmaßnahmen vorgeschlagen werden.

Ein Problem besteht aber darin, dass Serienprodukte für den Fahrzeugbereich typischerweise für einen Zeitraum von 10 bis 15 Jahren entwickelt werden. Das bedeutet, dass nach wie vor noch Steuergeräte in Neufahrzeugen eingesetzt werden, die ohne abgesicherten CAN-Transceiver ausgestattet sind. Diese sind weiterhin anfällig für eingeschleuste Nachrichten. Besonders für Hersteller von Nutzfahrzeugen gilt, dass dort langfristige Produktgenerationen eingesetzt werden. Die Produktzyklen können hier schon mal mehr als 15 Jahre betreffen.

Aus der DE102011084254A1 ist eine Firewall-Lösung für Fahrzeug-Kommunikations-Netzwerke bekannt. Es handelt sich dabei um eine separate Komponente, die außerhalb von einem Steuergerät angeschlossen wird, aber keine Gatewayfunktion enthält.

Das Dokument DE102017202022A1 beschreibt eine Lösung bei der die verschiedenen Steuergeräte in verschiedenen Sicherheitszonen angeordnet werden. Die unterschiedlichen Sicherheitszonen werden dabei durch eine sogenannte Domänenkontrolleinrichtung voneinander getrennt. Diese Domänenkontrolleinrichtung verfügt aber nicht über die Zusatzausstattung mit Gateway und Firewall-Funktion und abgesicherter CAN-Kommunikation. Stattdessen handelt es sich um eine Zusatzkomponente, die in einem separaten Gehäuse untergebracht ist und zusätzlich im Netzwerk integriert sein muss.

Das Dokument US2018205703A beschreibt sogenannte Gateway / Firewall Komponenten, die zwischen Fahrzeugbus (SAE J1939) und anderen Kommunikationsbussen im Fahrzeug angeordnet sind. Diese Komponenten filtern Schadnachrichten, die über die anderen Fahrzeugkommunikationsbusse von außen zum Fahrzeug gelangen aus. Die Gateway / Firewall Komponenten entsprechen aber Zusatzkomponenten die nicht in einem Steuergerät integriert sind.

Nun hat aber der Gesetzgeber festgelegt, dass ab dem Jahr 2024 in der EU keine Neufahrzeuge mehr zugelassen werden dürfen, die nicht konform zu der Richtlinie UN-ECE R155 sind. Darin wird verlangt, dass die Fahrzeug-Hersteller Gegenmaßnahmen für Cyber-Attacken in ihren Fahrzeug-NetzwerkArchitekturen vorsehen müssen. Auch in anderen Regionen der Erde müssen die entsprechenden UN-ECE Mitgliederstaaten solche Vorkehrungen treffen.

Zwar werden alle Zulieferer und Nutzfahrzeug-Hersteller bemüht sein, ein Maximum an Sicherheit gegen die bekannten Cyber-Attacken zu bieten, so ist es doch kein realistisches Szenario, dass bis 2024 für alle elektronischen Steuergeräte, Sensoren und Aktoren, die in Nutzfahrzeugen eingesetzt werden, neue Produktgenerationen entwickelt, getestet und zertifiziert sind und, dass bis dahin die Produktionsanlagen bereits auf die neuen Produktgenerationen umgestellt sind. Es kommt hinzu, dass für die neuen elektronischen Komponenten auch angepasste Netzwerkarchitekturen entwickelt, getestet und produziert werden müssen.

Zwar besteht die Möglichkeit Angriffe von außen über die Luftschnittstelle mit einem eigens dafür entwickelten besonders abgesicherten Gateway-Gerät abzuwehren, das gilt aber nicht für Angriffe, die von innen kommen, indem sich ein Angreifer Zugang zur Busleitung verschafft und ein manipuliertes elektronisches Gerät anschließt. Solche Angriffe sind aber besonders im Nutzfahrzeugbereich möglich, da die Fahrzeuge auf weiten Strecken unterwegs sind, wo sie nachts nicht auf geschützten Betriebshöfen abgestellt werden können. Hinzu kommt noch, dass Manipulationen an Anhängerfahrzeugen noch leichter möglich sind. Sie enthalten ebenfalls elektronische Komponenten, wie Bremsen-Steuergeräte und Sensoren und Aktoren, die an einen sogenannten Trailer-CAN-Bus angeschlossen sind. Dieser wird bei Ankopplung an das Zugfahrzeug mit dem T-CAN-Anschluss des Zugfahrzeuges verbunden. So wird dann eine Verbindung zum Fahrzeug-Bus des Zugfahrzeuges hergestellt. Wenn ein manipuliertes elektronisches Gerät an dem Trailer-CAN-Bus angeschlossen ist, kann es dann manipulierte Nachrichten auf den Fahrzeug-Bus des Zugfahrzeuges einschleusen. Der Einsatz von einem weiteren Gateway-Gerät zur Abwehr solcher eingeschleusten Nachrichten ist möglich, erhöht aber die Kosten beträchtlich.

Es besteht also der Bedarf für alternative Absicherungsmaßnahmen, die zumindest für einen Übergangszeitraum eingesetzt werden können und den Kriterien der UN-ECE R155 Richtlinie entsprechen. Die Erfindung setzt sich zum Ziel, eine wirkungsvolle Alternativlösung zu bieten, die es ermöglicht einen Mix von elektronischen Komponenten bestehender Produktgenerationen und abgesicherten elektronischen Komponenten neuerer Produktgeneration in einer angepassten Netzwerk-Architektur einzusetzen. Es soll mit dieser Lösung ebenfalls das Ziel erreicht werden, zuverlässig unberechtigte Buszugriffe zu erkennen und zu verhindern, dass die manipulierten Botschaften Schaden anrichten können.

Es ist daher Aufgabe der Erfindung eine Netzwerkarchitektur zu finden für den Einsatz eines noch nicht mit abgesichertem CAN-Transceiver oder Secure Onboard-Communication (SecOC) ausgestatteten elektronischen Gerätes, die die Anforderungen nach der geltenden Richtlinie UN-ECE R155 erfüllt.

Diese Aufgabe wird durch eine Vorrichtung zur abgesicherten Kommunikation zwischen Steuergeräten in einem Fahrzeug gemäß Anspruch 1, durch ein elektronisches Steuergerät gemäß Anspruch 7 und ein Fahrzeug gemäß Anspruch 19 gelöst.

Die abhängigen Ansprüche beinhalten vorteilhafte Weiterbildungen und Verbesserungen der Erfindung entsprechend der nachfolgenden Beschreibung dieser Maßnahmen.

**In** einer Ausprägung betrifft die Erfindung eine Vorrichtung zur abgesicherten Kommunikation zwischen Steuergeräten in einem Fahrzeug, wobei die Steuergeräte jeweils mit wenigstens einer Kommunikationsschnittstelle ausgestattet sind, über die sie an einen ersten Teil eines drahtgebundenen Fahrzeug-Bussystems zum Austausch von Nachrichten anschließbar sind. Dabei ist wenigstens ein abgesichertes Steuergerät vorgesehen, das an das Fahrzeug-Bussystem angeschlossen ist. Dieses abgesicherte Steuergerät ist gemäß der besonderen Netzwerkarchitektur mit wenigstens einer weiteren Kommunikationsschnittstelle versehen, an die ein Teil des Fahrzeug-Bussystems angeschlossen ist, an den wenigstens ein Steuergerät angeschlossen ist, das keine Abwehrmaßnahme gegen eingeschleuste Nachrichten beinhaltet. Dabei ist die abgesicherte Steuereinheit mit einer Gateway-Funktion und einer Sicherheitsausstattung versehen, die wenigstens die Funktion einer Firewall erfüllt, durch die Angriffe aus dem ersten Teil des Fahrzeug-Bussystems auf eine der Steuergeräte in dem abgetrennten Teil des Fahrzeug-Bussystems abgewehrt werden. Diese Lösung hat den Vorteil, dass die sogenannten Legacy-Steuergeräte, die noch ohne abgesicherten CAN-Transceiver oder Secured Onboard-Communication ausgestattet sind, weiter verwendbar bleiben. Sie sind zwar anfällig für eingeschleuste Nachrichten, werden aber durch Vorschaltung eines bereits abgesicherten Steuergerätes geschützt, das die in dem ersten Teil des Fahrzeug-Bussystems eingeschleusten Nachrichten abfängt und unschädlich macht. So ist es möglich einen Mix von abgesicherten und anfälligen Steuergeräten in einem Fahrzeug-Kommunikationsbussystem zu verwenden unter Einhaltung der in der Richtlinie geforderten Absicherung gegen Cyber-Attacken. Diese Lösung bietet dabei noch das Potential der Kosteneinsparung, denn es ist nicht erforderlich ein zusätzliches separates Gateway-Gerät einzusetzen, um die Legacy-Steuergeräte zu schützen. Stattdessen wird diese Aufgabe von einem neu entwickelten Steuergerät übernommen, das mit sicherem CAN-Transceiver ausgestattet ist. Dieses Steuergerät muss allerdings über genügend Rechenkapazität verfügen, um die Gateway-Funktion und die Firewall-Funktion zusätzlich ausführen zu können.

Dabei bezieht sich die Gateway-Funktion des abgesicherten Steuergeräts in vorteilhafter Weise besonders auf das Routing der Nachrichten zwischen den Teilnehmern in dem ersten und dem zweiten Teil des Fahrzeug-Bussystems.

Die Vorteile der Erfindung kommen besonders dann zum Tragen, wenn das drahtgebundene Fahrzeug-Bussystem einem CAN-Bussystem entspricht, entsprechend Controller Area Network, insbesondere in der Variante nach dem SAE J1939 Standard. Hier besteht ja das Problem der Anfälligkeit für eingeschleuste Nachrichten besonders, weil die CAN-Nachrichten in inhaltsadressierter Form versendet werden. Das bedeutet, dass die Nachrichten nicht mit Absender-Adresse und Ziel-Adresse versehen werden, woran eingeschleuste Nachrichten noch besser überprüfbar wären. Stattdessen wird ein sogenannter Botschafts-Identifizierer am Anfang der Nachricht gesendet, der auch noch den Inhalt der Nachricht bezeichnet. Daran können alle Stationen des CAN-Bussystems erkennen, ob sie die Nachricht benötigen. Die nicht mit abgesicherten CAN-Transceiver ausgestatteten Steuergeräte können aber daran nicht erkennen, ob die Nachricht eingeschleust wurde oder tatsächlich von dem originären Steuergerät gesendet wurde.

Es ist deshalb von Vorteil, dass die Steuergeräte in dem ersten Teil des Fahrzeug-Bussystems mit einer abgesicherten CAN-Bus-Kommunikationsschnittstelle ausgestattet sind, wobei die abgesicherte CAN-Bus-Kommunikationsschnittstelle so ausgelegt ist, das sie eingeschleuste Nachrichten eines manipulierten Steuergerätes im ersten Teil des Fahrzeug-Bussystems erkennen und unschädlich machen kann. Zu diesem Zweck werden auf dem Markt solche sicheren CAN-Transceiver bereits angeboten. Als Beispiel werden die CAN-Transceiver der Firma NXP Semiconductors N.V. vom Typ Stinger erwähnt. Es besteht auch die Möglichkeit die Kommunikation mit einem zusätzlichen Software-Stapel abzusichern, der die Secured Onboard-Communication unterstützt.

**In** einer Ausführungsform der Erfindung ist das abgesicherte Steuergerät ein Bremsen-Steuergerät EBS, entsprechend "Electronic Braking System" und das wenigstens eine in den anderen Teil des Fahrzeug-Bussystems verschobene Steuergerät (Legacy-Steuergerät) betrifft ein Fahrerassistenzsystem-Steuergerät oder ein Umgebungserfassungssystem-Steuergerät, an das wenigstens ein Umgebungserfassungssensor wie Kamera, Radar, Lidar, Ultraschall oder IR-Kamera angeschlossen ist. Dabei können auch zwei oder mehr Legacy-Steuergeräte in dem zweiten Teil des Fahrzeug-Bussystems angeordnet sein. Dies hat den Vorteil, dass mehrere Steuergeräte einer älteren Produktgeneration wiederverwendet werden können.

In einer anderen Ausprägung betrifft die Erfindung ein elektronisches Steuergerät, mit einer ersten Kommunikationsschnittstelle, über die das Steuergerät an einen ersten Teil eines drahtgebundenen Fahrzeug-Bussystems zum Austausch von Nachrichten anschließbar ist. Dieses Steuergerät zeichnet sich dadurch aus, dass es wenigstens eine weitere Kommunikationsschnittstelle aufweist, an die ein abgetrennter Teil des Fahrzeug-Bussystems anschließbar ist, wobei das Steuergerät mit einer Gateway-Funktion und einer Sicherheitsausstattung versehen ist, die wenigstens die Funktion einer Firewall erfüllt, zu dem Zweck Angriffe aus dem ersten Teil des Fahrzeug-Bussystems auf eines der Steuergeräte in dem ungesicherten Teil des Fahrzeug-Bussystems abzuwehren. Mit einem so ausgestatteten Steuergerät lässt sich in vorteilhafter Weise die besondere Netzwerkarchitektur realisieren, wie sie bei der ersten Ausprägung der Erfindung dargestellt wird.

Zur weiteren Absicherung des Fahrzeug-Bussystems ist es vorteilhaft, wenn die Sicherheitsausstattung für das elektronisch Steuergerät weiterhin die Funktion eines abgesicherten Bootvorgangs betrifft. Mit Hilfe dieser Maßnahme werden die einzelnen Schritte beim Bootvorgang überwacht. Es ist damit sogar möglich zu gewährleisten, dass ausschließlich der kryptografisch signierte Bootloader in dem Steuergerät gestartet wird, für den die Zertifikate im Hardware-Security-Modul hinterlegt sind. Diese sind dort sicher aufbewahrt und vor Manipulationen sicher. Damit lassen sich beispielsweise bösartige Bootloader-Programme, die durch Manipulation in das Steuergerät nachträglich geladen wurden, blockieren.

Dabei sollte sich in vorteilhafter Weise die Gateway-Funktion des Steuergeräts auf das Routing der Nachrichten zwischen den Teilnehmern in dem ersten und dem abgetrennten Teil des Fahrzeug-Bussystems beziehen.

Besonders vorteilhaft ist es, wenn die erste und wenigstens eine weitere Kommunikationsschnittstelle des elektronischen Steuergerätes einer CAN-Bus-Kommunikationsschnittstelle entspricht, entsprechend Controller Area Network, die insbesondere in der Variante nach dem SAE J1939 Standard ausgelegt ist. Wie beschrieben, ist der CAN-Bus anfällig für Angriffe durch eingeschleuste Nachrichten. Deshalb ist es umso wichtiger das elektronische Steuergerät mit einer Sicherheitsausstattung genau für diesen Kommunikationsbus-Typ zu versehen.

Sehr vorteilhaft ist es diesbezüglich, dass die CAN-Bus-Kommunikationsschnittstelle für den Anschluss an den ersten Teil des Fahrzeug-Bussystems mit einem abgesicherten CAN-Transceiver ausgestattet ist, der Angriffe, die auf eingeschleusten Nachrichten seitens eines manipulierten Steuergerätes im ersten Teil des Fahrzeug-Bussystems beruhen, abwehren kann. Wie beschrieben, sind solche abgesicherten CAN-Transceiver auf dem Markt erhältlich.

Ebenso von Vorteil ist, dass die Sicherheitsausstattung weiterhin eine Funktion zur Zertifikat-basierten Authentifizierung eines an ein Steuergerät oder ein Gateway-Gerät des ersten Teils des Fahrzeug-Bussystems angeschlossenen externen Diagnosetesters aufweist. Dies ist sogar dringend erforderlich, um zu verhindern, dass mit einem manipulierten Diagnosetester eine Schadsoftware auf das Steuergerät geladen wird.

Zum gleichen Zweck ist es vorteilhaft, wenn die Sicherheitsausstattung sogar ein HSM-Modul betrifft, entsprechend Hardware Security Modul, zur Gewährleistung einer sicheren Authentifizierung wenigstens des an ein Steuergerät des ersten Teils des Fahrzeug-Bussystems angeschlossenen externen Diagnosetesters. Im HSM-Modul können Schlüssel, und Zertifikate, die zur Authentifizierung herangezogen werden, sicher aufbewahrt werden. Das HSM-Modul kann weiterhin eine Recheneinheit enthalten, die benötigt wird, um kryptographische Berechnungen wie Hash-Algorithmen, Schlüsselableitungen, Verschlüsselungs- und Entschlüsselungs-Algorithmen, Berechnungen von Signaturen, Berechnungen von Zufallszahlen, Berechnungen zur Authentifizierung und Identifizierung, etc. sicher auszuführen.

Während die Authentifizierung des Diagnosetesters seitens des abgesicherten Steuergerätes mit starker Zertifikat-basierter Authentifizierung erfolgen kann, ist dies für das in den abgetrennten Teil des Fahrzeug-Bussystems verschobene Legacy-Steuergerät nicht möglich, da es nicht mit den entsprechenden Algorithmen, geschweige denn mit HSM-Modul, ausgestattet ist. Hier ist es dann von Vorteil, dass die Sicherheitsausstattung des abgesicherten Steuergerätes weiterhin die Funktion eines Diagnose-Client-Steuergeräts aufweist zur "Seed-Key"-Authentifizierung eines an den abgetrennten Teil des Fahrzeug-Bussystems angeschlossenen Steuergerätes bzgl. des Ausführens von Diagnosefunktionen, die durch die Kommunikation mit dem durch Zertifikat verifizierten externen Diagnosetester aufgerufen werden. So ist dann auch das Auslesen der Fehlerspeichereinträge in den Legacy-Steuergeräten durch den Diagnosetester möglich, weil das abgesicherte Steuergerät diese Diagnosefunktionen nach sicherer Authentifizierung des Diagnosetesters unterstützt.

In einer weiteren Ausgestaltung der Erfindung ist es vorteilhaft, dass die Sicherheitsausstattung weiterhin die Funktion aufweist, dass bestimmte als gefährlich eingestufte von dem externen Diagnosetester eintreffende Diagnosebefehle, die an das zu testende Steuergerät in dem ungesicherten Teil des Fahrzeug-Bussystems gerichtet sind, unterbunden werden. Solche gefährlichen Diagnosebefehle sind insbesondere Befehle in Bezug auf das Lesen und Schreiben von für die Ausführung von Computerprogrammen allokierten Speicherbereichen des zu testenden Steuergerätes oder für die Permanentspeicherung von Computerprogrammen in nichtflüchtigen Speicherbereichen.

In einer besonders sicheren Ausgestaltung der Erfindung weist die Sicherheitsausstattung weiterhin die Funktion auf, die eingehenden Diagnosebefehle, einzeln oder gruppenweise zu verifizieren, in dem die Zertifikat-basierte Authentifizierung des externen Diagnosetesters jeweils erneut durchgeführt wird, bevor der betreffende Diagnosebefehl an das zu testende Steuergerät in dem ungesicherten Teil des Fahrzeug-Bussystems weitergeleitet wird. Dies hat allerdings den Nachteil, dass sich der benötigte Zeitraum für die Durchführung des Tests verlängert.

Zusätzlich kann die Sicherheitsausstattung in dem abgesicherten Steuergerät weiterhin die Funktion eines abgesicherten Software-Update-Vorgangs aufweisen, in dem die in dem nichtflüchtigen Speicherbereich gespeicherten Computerprogramme ausgetauscht werden können. Die Maßnahme kann z.B. darin bestehen, dass das zu ladende Computerprogramm mit einem digital signiertem Hash-Code versehen ist, der im Steuergerät überprüft wird, bevor das Programm in den nichtflüchtigen Speicher geschrieben wird. Anderenfalls sollte diese Möglichkeit des Software-Updates gesperrt werden, da es sonst möglich wäre Schadsoftware in den nichtflüchtigen Speicherbereich zu laden.

Drei mögliche Varianten der Realisierung der Erfindung bestehen darin ein Bremsen-Steuergerät EBS, entsprechend "Electronic Braking System" oder ein Steuergerät für ein Abstandsregelsystem oder ein Steuergerät für ein automatisches Fahrsystem mit der erfindungsgemäßen Sicherheitsausstattung zu versehen.

Eine weitere Ausprägung der Erfindung besteht in einem Fahrzeug mit einer Antriebseinheit und einem elektronisch geregelten Bremssystem, das eine erfindungsgemäße Vorrichtung aufweist.

Ausführungsbeispiele der Erfindung sind in den Zeichnungen dargestellt und werden nachfolgend anhand der Figuren näher erläutert.

Es zeigen:
- Fig. 1: ein Zugfahrzeug und ein abholbereites Anhängerfahrzeug in der Art eines Sattelaufliegers,
- Fig. 2: ein erstes Blockschaltbild für die elektronische Ausstattung eines Zugfahrzeuges;
- Fig. 3: ein Blockschaltbild für die elektronische Ausstattung eines Anhängerfahrzeuges;
- Fig. 4: zeigt das Prinzip der Vernetzung von elektronischen Komponenten mittels CAN-Bus;
- Fig. 5: das Format eines Standard-Datenrahmens für die Übertragung einer Nachricht auf dem CAN-Bus;
- Fig. 6: das Nachrichtenformat für die Übertragung einer Nachricht nach dem Diagnoseprotokoll UDS;
- Fig. 7: ein Diagramm, das den Nachrichtenaustausch zwischen den beteiligten Steuergeräten bei dem Vorgang der Durchführung eines Diagnosetests eines Legacy-Steuergerätes mit einem an das Bordnetzwerk angeschlossenen Diagnosetester darstellt; und
- Fig. 8: ein zweites Blockschaltbild für die elektronische Ausstattung eines Zugfahrzeuges.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

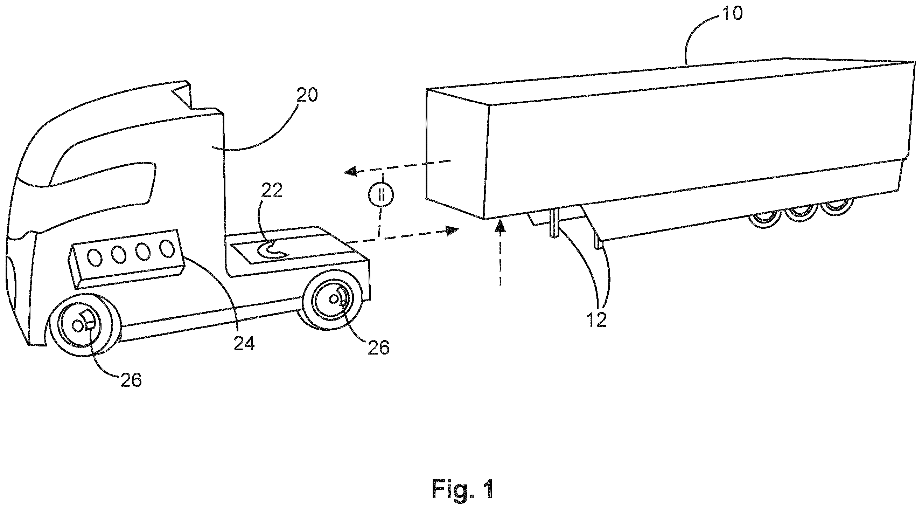

Fig. 1 zeigt ein Zugfahrzeug 20 bei der Ausrichtung zu einem abholbereiten Anhängerfahrzeug 10. Unter dem Begriff Anhängerfahrzeug 10 wird hier ein Anhängerfahrzeug verstanden, das mit einem Ankoppelsystem für ein Zugfahrzeug 20 ausgestattet ist. Es handelt sich vorwiegend um Nutzfahrzeug-Anhänger. Diese sind oft als Sattelauflieger-Fahrzeug mit einem Ankoppelsystem ausgestattet, bei dem ein sogenannter Königszapfen des Anhängerfahrzeuges 10 in eine Sattelplatte 22 des Zugfahrzeuges geführt wird, bis zum Einrasten, wodurch eine drehbare Verbindung zwischen Zugfahrzeug 20 und Anhängerfahrzeug 10 entsteht. Es kann sich aber auch um andere Anhängerfahrzeuge handeln, beispielsweise Anhängerfahrzeuge, die in der Landwirtschaft benutzt werden, oder Anhängerfahrzeuge, die an Baufahrzeuge angehängt werden. Auch größere Wohnwagen, sowie Freizeit- und Sportanhänger, kommen in Betracht.

Bei dem Zugfahrzeug 20 kann es sich um ein typisches Zugfahrzeug 20 handeln. Es handelt sich vorwiegend um ein Nutzfahrzeug. Auch hier gilt, dass auch andere Zugfahrzeuge in Betracht kommen. Als weitere Beispiele werden genannt, Zugfahrzeuge, die in der Landwirtschaft benutzt werden, oder Baufahrzeuge oder Campingfahrzeuge. Schließlich wird erwähnt, dass die Auflistung keine abschließende Auflistung darstellt. So kommen ebenfalls Personenkraftwagen als Zugfahrzeuge zum Einsatz, die ebenfalls mit dem Gegenstand der Erfindung ausgerüstet werden können. Auch der Begriff Zugfahrzeug wird hier nur beispielhaft verwendet. Die Erfindung kann auch in anderen Fahrzeugen zum Einsatz kommen die nicht als Zugfahrzeuge benutzt werden. Dazu gehören auch Busse und Bau- und Erntemaschinen, sowie Motorräder, Roboter, Flugzeuge und Drohnen.

Das Zugfahrzeug 20 ist mit einer Antriebseinheit 24 ausgestattet, die in der dargestellten Form einer Brennkraftmaschine entspricht. Selbstverständlich können auch andere Arten von Antriebseinheiten in dem Zugfahrzeug integriert sein. Als weitere Beispiel werden Elektromotoren und Brennstoffzellen genannt. Bei den Rädern des Zugfahrzeuges 20 sind noch die Betriebsbremsen 26 hervorgehoben.

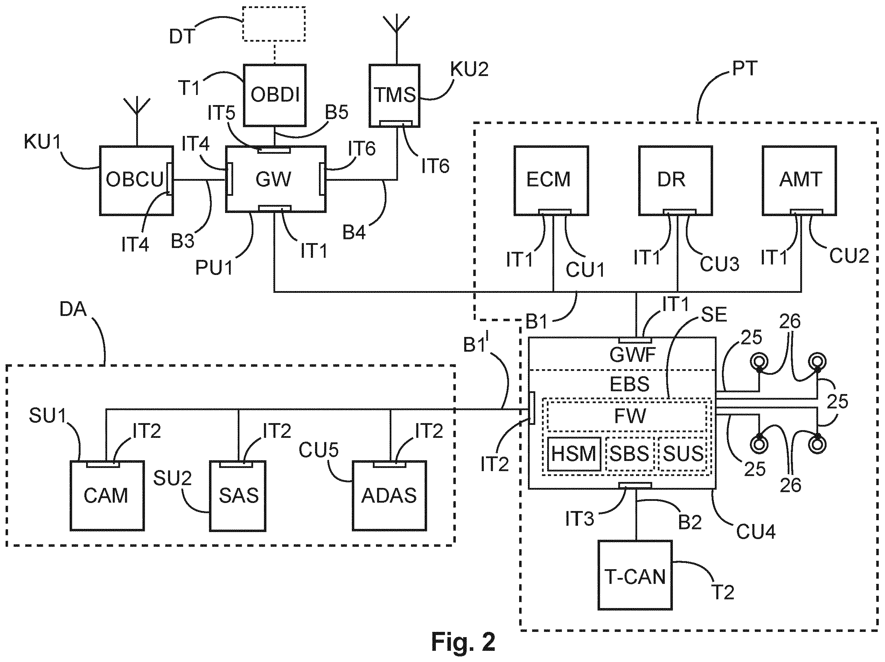

Fig. 2 zeigt die Struktur eines beispielhaften Fahrzeug-Elektroniksystems des Zugfahrzeuges 20. Es sind die elektronischen Steuergeräte eines Antriebsstrangs PT gezeigt und die elektronischen Steuergeräte eines Fahrerassistenzsystemstrangs DA. Zusätzlich ist noch ein Gateway PU1 mit angeschlossenen On-Board-Kommunikationsgeräten KU1 und KU2 gezeigt. Das On-Board-Kommunikationsgerät KU1 kann als LTE- oder 5G-Modem ausgebildet sein oder als WLAN-Modul. Darüber läuft die Kommunikation zu Geräten, die an das Internet oder ein anderes öffentliches Kommunikationsnetz angebunden sind. Ebenfalls wird darüber der Datenverkehr zu anderen Fahrzeugen, auch V2V-Kommunikation genannt, entsprechend vehicle-tovehicle, oder zu Infrastrukturgeräten, die stationär sind, entsprechend V2X-Kommunikation abgewickelt. Für die Kommunikation zu anderen Fahrzeugen kann zu diesem Zweck die sogenannte "Sidelink"-Kommunikationsfähigkeit des LTE-Modems eingesetzt werden oder die sogenannte "PC5"-Kommunikationsfähigkeit des 5G-Modems. Auch über ein WLAN-Modul kann die V2X-Kommunikation, entsprechend vehicle-to-everything abgewickelt werden.

Das On-Board-Kommunikationsgerät KU2 versorgt das Zugfahrzeug 20 mit Telematik-Daten. Darunter fallen z.B. die bekannten Anwendungen aus dem Logistikbereich, wie Mautgebührenerfassung, aber auch Daten, die zur Lenkung des Verkehrsflusses dienen. Es kann sich z.B. um ein GSM-Modul handeln. An das zentrale Gateway PU1 ist noch ein Anschluss T1 für einen Werkstatt-Diagnosetester T1 angeschlossen. Es können auch noch weitere elektronische Komponenten an das zentrale Gateway PU1 angeschlossen werden, die in der Fig. 2 nicht dargestellt sind. Als Beispiel werden die elektronischen Geräte eines Infotainment-Systems genannt. Darunter fallen z.B. die Komponenten Navigationsgerät, Radio, Telefon, sowie ein Touchscreen-Anzeigegerät zur Bedienung und zur Information des Fahrers. Es kann ebenfalls ein so genanntes Body-Control-Modul an das Gateway PU1 angeschlossen werden. Dieses dient dazu die verschiedenen Einstellungen von vom Fahrer bedienbaren Komponenten zu empfangen und umzusetzen. Hier werden als Beispiele die Scheibenwischer, die Scheibenwaschanlage, die Türschlösser, die verschiedenen Lampen und Blinklampen, die Fensterheber, die Motoren zur Sitzverstellung, die Klimaanlage, etc. genannt.

Zum Antriebstrang PT gehören verschiedene elektronische Steuergeräte. Der Block CU1 bezeichnet eine elektronische Motorsteuerung. Der Block CU2 bezeichnet ein Automatikgetriebe-Steuergerät. Der Block CU3 bezeichnet ein elektronisches Steuergerät der Retardereinheit. Diese dient zum Unterstützen eines Bremsvorgangs und kann ein Überhitzen der Reibbremsen 26 an den Rädern verhindern. Der Block CU4 bezeichnet ein elektronisches Bremsen-Steuergerät EBS, entsprechend "Electronic Braking System". Mit der Bezugszahl 26 ist jeweils eine Betriebsbremse pro Rad bezeichnet. Jede Betriebsbremse 26 kann von dem elektronischen Bremsen-Steuergerät CU4 separat betätigt werden. Dazu sind die entsprechenden Bremsleitungen 25 an das elektronische Bremsen-Steuergerät EBS angeschlossen.

Das Bezugszeichen DA markiert einen Fahrerassistenzsystemstrang in der Fig. 2. Der Block CU5 bezeichnet ein elektronisches Steuergerät eines Fahrerassistenzsystems ADAS, entsprechend "advanced driving assistance system". Es handelt sich dabei um ein adaptives Abstandsregelsystem, dass den Abstand zum vorausfahrenden Fahrzeug automatisch einhält. Es misst den Abstand zum vorausfahrenden Fahrzeug und sendet Steuerbefehle an die Steuergeräte des Antriebsstrangs, um das Fahrzeug abzubremsen, wenn sich der Abstand zum vorausfahrenden Fahrzeug verringert oder, um das Fahrzeug zu beschleunigen, wenn sich der Abstand zum vorausfahrenden Fahrzeug vergrößert. Die Besonderheit des elektronischen Steuergerätes CU5 besteht darin, dass es bereits den Radar-Sensor zum Messen des Abstandes integriert hat. In einer anderen Ausführungsform kann das Steuergerät CU5 ohne integrierten Radar-Sensor ausgestattet sein. Der Radar-Sensor müsste dann, wie die dargestellte Kamera SU1, an das Steuergerät CU5 angeschlossen werden. Die Kamera SU1 dient als weiterer Umgebungserfassungssensor. Sie kann helfen die Objekte in der Umgebung genauer zu bestimmen. Dies kann auch helfen zu erkennen, ob die gemessen Abstandswerte zuverlässig sind. Wenn eine Stereokamera eingesetzt wird, kann diese auch zur Abstandsbestimmung eingesetzt werden. Dann bietet sich auch die Möglichkeit der Erhöhung der Genauigkeit für die Abstandsmessung. Das elektronische Steuergerät CU5 kann zu diesem Zweck eine Recheneinheit beinhalten, die eine Sensorfusion mit den Abstandswerten, die der Radar-Sensor liefert und den Abstandswerten, die die Stereokamera SU1 liefert, durchführt. Mit dem Bezugszeichen SU2 ist ein Lenkwinkelsensor bezeichnet. Dieser ist am Lenksystem angebracht, ist aber mit einem weiteren Kabel auch an das Fahrerassistenzsystem angeschlossen, damit das Fahrerassistenzsystem bei entsprechender Kurvenfahrt den Abstand genauer bestimmen kann.

Die elektronischen Steuergeräte CU1 bis CU4 und das Gateway-Modul PU1 sind über ein Bussystem B1 miteinander vernetzt. Es kann zu diesem Zweck ein für die fahrzeuginterne Kommunikation ausgelegtes Bussystem eingesetzt werden. Typischerweise werden serielle Bussysteme zu diesem Zweck eingesetzt, da bei ihnen der Verkabelungsaufwand am Geringsten ist. Als mögliche Beispiele werden genannt ein CAN-Bussystem, entsprechend Controller Area Network. Es gibt verschiedene Varianten von dem CAN-Bussystem wie CAN Low Speed, und CAN High Speed für verschiedene Datenraten von 125 kBit/s, und 1000 kBit/s. Weiterhin wurde ein erweiterter CAN-Bus spezifiziert unter der Bezeichnung CAN-FD Bus, wobei FD für "Flexible Data Rate" steht. Diese Spezifikation definiert einen erweiterten Datenrahmen mit höherer Transportkapazität, bei dem das Nutzdatenfeld vergrößert ist. Die Busarchitektur ist in Fig. 2 für den Bus B1 so dargestellt, dass eine gemeinsame Busleitung verwendet wird. Jedes an diesen Bus B1 angeschlossene Gerät ist mit einer Kommunikationsschnittstelle IT1 ausgestattet. Wenn das Bussystem den CAN-Bus betrifft, wird dementsprechend eine Kommunikationsschnittstelle IT1 für den CAN-Bus eingesetzt.

Typischerweise wird das Bussystem B1 als CAN-Bus ausgeführt und als Fahrzeug-Bus bezeichnet. Der Fahrzeug-Bus ist ein spezieller CAN-Bus, der dann in der Variante nach dem Standard gem. SAE J1939 ausgelegt ist. Die SAE-Standards werden von der SAE-Organisation, entsprechend Society of Automotive Engineers herausgegeben.

Auch das Gateway-Modul PU1 ist mit der Kommunikationsschnittstelle IT1 ausgestattet. Für die Kommunikation mit dem On-Board-Kommunikationsgerät KU1 ist das Gateway-Gerät PU1 mit einer Kommunikationsschnittstelle IT4 ausgestattet. Für die Kommunikation mit der On-Board-Diagnoseschnittstelle T1 ist das Gateway-Gerät PU1 mit einer Kommunikationsschnittstelle IT5 ausgestattet. Für die Kommunikation mit der Telematikeinheit T1 ist das Gateway-Gerät PU1 mit einer Kommunikationsschnittstelle IT6 ausgestattet.

Die Komponenten CU5, SU1 und SU2 des Fahrerassistenzsystemstrangs DA sind über den Kommunikationsbus B1' vernetzt. Dieser Kommunikationsbus B1' kann ebenfalls als CAN-Bus ausgebildet sein. Alternativ kann er als CAN-FD-Bus ausgebildet sein. Das elektronische Steuergerät CU4 ist dafür mit einer weiteren Kommunikationsschnittstelle IT2 ausgestattet. Ebenfalls sind die Komponenten CU5, SU1 und SU2 mit der Kommunikationsschnittstelle IT2 ausgestattet. Wenn der Bus B1' ebenfalls als CAN-Bus realisiert wird, ist die Kommunikationsschnittstelle IT2 ebenfalls als CAN-Bus-Schnittstelle ausgelegt. An das elektronische Steuergerät CU4 ist noch ein weiterer KommunikationsBus B2 angeschlossen. Dieser ist mit einer Anschlussbuchse T2 verbunden. Diese dient bei Ankopplung eines Anhänger-Fahrzeuges 10 zur Aufnahme des entsprechenden Steckers des Kommunikationsbusses des Anhänger-Fahrzeuges 10. Das elektronische Steuergerät CU4 ist dafür mit der Kommunikationsschnittstelle IT3 versehen. Auch der Bus B2 kann als CAN-Bus realisiert werden, so dass auch die Kommunikationsschnittstelle IT3 als CAN-Bus-Schnittstelle ausgelegt werden könnte. Das elektronische Steuergerät CU4 ist mit einer Gateway Funktion GWF und einer Sicherheitsausstattung SE versehen. Diese besteht aus einem Hardware-Security-Modul HSM, einer Firewall FW, einem Secure Boot Loader SBS und einem Secure Update Loader SUS. Das HSM-Modul dient, wie bereits erwähnt, zur sicheren Verwahrung von kryptographischen Informationen wie Passwörtern, Schlüsselinformationen und Zertifikaten und zur sicheren Durchführung von kryptographischen Rechenoperationen, wie die Berechnung eines Schlüssels in Abhängigkeit einer Seed-Key-Information, z.B. bei der Methode des sicheren Diffie-Hellman-Schlüsselaustauschs, die Berechnung eines Hash-Wertes, die Durchführung von Verschlüsselungs- oder Entschlüsselungs-Algorithmen, etc.. Das HSM-Modul HSM ist sicher vor Manipulationen, da es mit Hardware realisiert wird und nicht umprogrammiert werden kann.

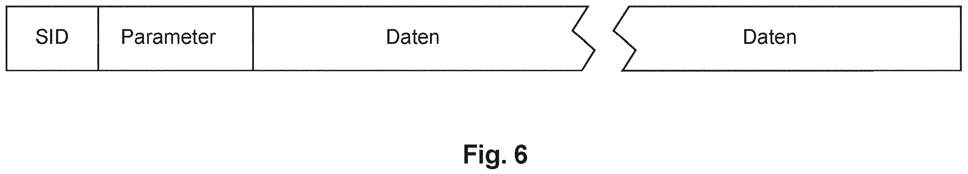

Die Aufgabe der Firewall FW besteht darin, den Datenverkehr über die verschiedenen Kommunikationsbus-Anschlüsse zu überwachen. Die Firewall wird mit Software realisiert und dient dazu, den Netzwerkzugriff zu beschränken. Sie überwacht den durch die Firewall laufenden Datenverkehr und entscheidet anhand festgelegter Regeln, ob bestimmte Netzwerkpakete durchgelassen werden oder nicht. Auf diese Weise versucht sie, unerlaubte Netzwerkzugriffe zu unterbinden. Die Anzahl und Art der festgelegten Regeln ist dabei entscheidend welcher Sicherheitsgrad damit erreicht werden kann. Weitere Einzelheiten zum Einsatz der Sicherheitsausstattung SE werden nachfolgend anhand der Beschreibung der Fig. 6 näher erläutert.

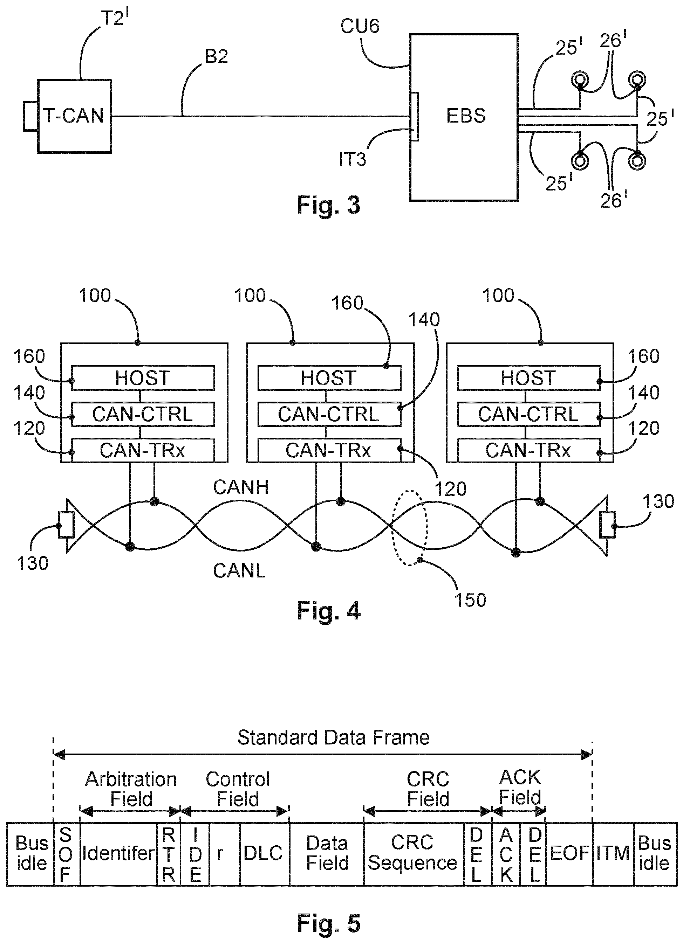

Die Fig. 3 zeigt ein Blockschaltbild des Elektroniksystems eines Anhänger-Fahrzeuges 10. Dabei bezeichnet das Bezugszeichen CU6 ein Bremsen-Steuergerät für das Anhängerfahrzeug 10. Dieses steuert in gleicher Weise die Betriebsbremsen 26' der Räder des Anhängerfahrzeuges 10 an, wie das Bremsen-Steuergerät CU4. Dieses Bremsen-Steuergerät CU6 ist aber als Legacy-Steuergerät ausgelegt und beinhaltet deshalb nicht die Sicherheitsausstattung wie das Steuergerät CU4 und kein Gateway-Funktion. Die Bremsleitungen des Anhängerfahrzeuges 10 sind mit dem Bezugszeichen 25' bezeichnet. Das Bezugszeichen B2 bezeichnet den Kommunikationsbus des Anhängerfahrzeuges 10. Dabei wird mit T2' der Anschlussstecker zum Einstecken in die Anschlussbuchse T2 des Anschlussbusses B2 des Zugfahrzeuges 20 bezeichnet. Dieser wird bei Ankupplung des Anhängerfahrzeuges 10 in die Anschlussbuchse T2 des Anschlussbusses B2 des Zugfahrzeuges 20 gesteckt. Typischerweise wird der Anschlussbus B2 ebenfalls als CAN-Bus ausgelegt. Das Bremsen-Steuergerät CU6 ist deshalb mit einer Kommunikationsschnittstelle IT3 ausgestattet, die ebenfalls eine CAN-Busschnittstelle sein kann.

Fig. 4 zeigt das Prinzip der Vernetzung von elektronischen Komponenten mittels CAN-Bus. Ein CAN-Netzwerk ist ein Systemverbund aus CAN-Knoten (elektronische Komponenten (Steuergeräte, Sensoren, Aktoren) mit CAN-Schnittstelle), die über ihre jeweiligen CAN- Schnittstellen und einem alle CAN-Schnittstellen verbindendes Übertragungsmedium (Busleitung) untereinander Daten austauschen. Es sind drei CAN-Knoten 100 dargestellt. Die Busstruktur des CAN-Bus ist linear. Es gibt daher eine Busleitung 150, an die alle drei CAN-Knoten 100 angeschlossen sind. Als Busleitung 150 wird in den häufigsten Einsatzfällen eine verdrillte, ungeschirmte Zweidrahtleitung (Unshielded Twisted Pair - UTP) genutzt, über die eine symmetrische Signalübertragung erfolgt. Bei der symmetrischen Signalübertragung werden die Signale als Spannungsdifferenzen über zwei Leitungen übertragen. Das Leitungspaar setzt sich dabei aus einer nicht invertierten CANH und einer invertierten Signalleitung CANL zusammen. Aus der Differenz der auf diesen beiden Leitern anliegenden Signale rekonstruieren die Empfänger das ursprüngliche Datensignal. Dies hat den Vorteil, dass sich Gleichtaktstörungen, die auf beiden Leitern der Busleitung 150 auftreten, durch die Differenzbildung weglöschen und sich so nicht auf die Übertragung auswirken.

Um Signalreflektionen zu vermeiden ist die Busleitung 150 an beiden Leitungsenden mit einem Abschlusswiderstand R_{T} der Größe des Wellenwiderstandes der Busleitung (120 Ohm) abgeschlossen. Eine CAN-Schnittstelle setzt sich aus zwei Teilen zusammen: der Kommunikationssoftware und der Kommunikationshardware. Während die Kommunikationssoftware höhere Kommunikationsdienste umfasst, sind die grundlegenden Kommunikationsfunktionen typischerweise in Hardware implementiert: Hier werden zwei Hardware-Komponenten unterschieden: Der CAN-Controller 140 sorgt für die einheitliche Abwicklung des CAN-Kommunikationsprotokolls, und entlastet dadurch den Host 160, auf dem die bereits erwähnte Kommunikationssoftware läuft. Der CAN-Transceiver 120 sorgt für die Ankopplung des CAN- Controllers 140 an den CAN-Bus 150. Er formt die Signale für die Datenübertragung beim Sendevorgang und macht die Signalaufbereitung im Empfangsfall.

Die Fig. 5 zeigt das Format eines Standard-Datenrahmens für die Übertragung einer Nachricht auf dem CAN-Bus.

Es sind viele verschiedene einzelne Bits im Übertragungsrahmen nach ISO 11898-1 vorhanden, die Steuerungszwecke erfüllen. Die verschiedenen Felder und Steuerungsbits des Übertragungsrahmens sind mit ihrer Bezeichnung in englischer Sprache in der folgenden Tabelle aufgelistet. Ebenfalls wird die Länge der einzelnen Felder angegeben.

**Tabelle 1**

| Control Bit | Ausführliche Bezeichnung | Länge |
|---|---|---|
| SOF | Start of Frame | 1 Bit |
| Identifier | Identifier | 9 Bits |
| RTR | Remote Transmission Request | 1 Bit |
| IDE | Identifier Extension | 1 Bit |
| r | Reserved Bit | 1 Bit |
| DLC | Data Length Code | 4 Bit |
| Data Field | Data Field | 0-8 Bytes |
| CRC | CRC Sequence | 15 Bit |
| DEL CRC | CRC Delimiter | 1 Bit |
| ACK | Acknowledge | 1 Bit |
| DEL ACK | ACK Delimiter | 1 Bit |
| EOF | End of Frame Code | 4 Bit |

Ein CAN-Frame enthält ein Start-of-Frame (SOF) -Feld, ein Arbitrationsfeld, ein Steuerfeld, ein Datenfeld, ein Cyclic Redundancy Check (CRC) Feld, ein ACK-Feld, ein End-of-Frame (EOF) Feld und eine Intermission Sequence (ITM) Feld.

Das SOF-Feld ist ein Feld, das den Beginn eines CAN-Rahmens anzeigt, d.h. den Beginn einer Nachricht. Das Arbitrationsfeld identifiziert eine Nachricht und weist der Nachricht eine Priorität zu. Gemäß der Länge eines in dem Arbitrationsfeld zugeordneten Identifikationsfeldes wird der CAN- Rahmen in ein Standardformat und ein erweitertes Format aufgeteilt (gezeigt ist das Standardformat). Im Standardformat hat das Arbitrationsfeld eine Länge von 11 Bits. Für das erweiterte Format beträgt die Länge des Identifikationsfeldes im Arbitrationsfeld 29 Bits.

Der Identifizierer legt die Priorität des Datenrahmens fest und sorgt zusammen mit der Akzeptanzfilterung für die in der Kommunikationsmatrix definierten Sender-Empfänger-Relationen im CAN-Netzwerk. In der Kommunikationsmatrix ist für jedes Steuergerät festgelegt, welche Botschaften es verarbeitet. Wenn also eine Botschaft eingeht, dessen Botschafts-Identifizierer nicht dort aufgelistet ist, wird diese Botschaft durch die Akzeptanzfilterung aussortiert und nicht an die Applikation weitergeleitet. Gleichzeitig muss für den CAN-Bus auch die eingangs erwähnte Eindeutigkeitsregel eingehalten werden, die bestimmt, dass der ein Botschafts-Identifizierer für eine Botschaft eines bestimmten Steuergeräte-Typs reserviert ist und nicht noch einmal für eine andere Botschaft eines anderen Steuergerätes vergeben werden darf.

Mittels des RTR-Bit teilt die Sendestation den Empfängern den Frametyp (Data Frame oder Remote Frame) mit. Ein dominantes RTR-Bit zeigt einen Data Frame an, entsprechend ein rezessives Bit den Remote Frame. Zusätzlich kann das Arbitrationsfeld ein Identifikationserweiterungsfeld (IDE) mit einer Länge von 1 Bit enthalten, um zu identifizieren, ob ein Rahmen das Standardformat oder das erweiterte Format hat. Wenn der Wert des IDE-Feldes 0 ist, zeigt dies das Standardformat an. Wenn der Wert 1 ist, bedeutet dies das erweiterte Format vorliegt. In dem DLC-Feld wird den Empfängern die Anzahl der in der Botschaft enthaltenen Nutzdaten-Bytes angezeigt. Transportiert werden die Nutzdaten-Bytes im Data Field. Maximal können mit einem Data Frame acht Nutzdaten-Bytes übertragen werden. Gegen Übertragungsfehler werden die Nutzdaten-Bytes mithilfe einer im CRC-Feld übertragenen Prüfsumme von 15 Bit Länge unter Anwendung des Cyclic Redundancy Checks abgesichert. Ausgehend vom Ergebnis des CRC Checks quittieren die Empfänger im ACK-Slot den Empfang entweder positiv oder negativ. Dabei wird ein ACK-Bit am Ende der Nachricht durch die CAN-Controller übertragen, die die Nachricht korrekt empfangen haben. Die Station, die die Nachricht gesendet hat, prüft, ob das ACK-Bit auf dem CAN-Bus vorhanden ist oder nicht. Wenn ACK nicht gefunden wird, ist dies ein Indiz, dass eine Station die Nachricht nicht korrekt empfangen konnte und die Sendestation kann eine erneute Übertragung versuchen. Beendet wird die Übertragung eines Daten-Rahmens mit sieben rezessiven Bits, das entspricht dem End Of Frame Code EOF.

Nachfolgend wird ein Beispiel eines Ablaufes eines Diagnosevorgangs bei Anschluss eines externen Diagnosegerätes DT an die Bordelektronik des Zugfahrzeuges 20 anhand der Fig. 6 erläutert. Die beteiligten elektronischen Steuereinheiten sind in der oberen Zeile der Fig. 6 dargestellt und mit dem entsprechenden Bezugszeichen versehen. Es handelt sich um die Onboard-Diagnoseschnittstelle OBDI, die in der Anschlussbuchse T1 enthalten sein kann, die Verarbeitungseinheit PU1 (Gateway-Gerät), das Bremsen-Steuergerät CU4 und das elektronische Steuergerät CU5, das mit Radar-Sensor ausgerüstet ist und die Abstandsregelung zu den vorausfahrenden Fahrzeugen durchführt. Im ersten Schritt S1 sendet das angeschlossene Diagnosetestgerät DT eine Nachricht zur Eröffnung einer Diagnosesitzung an die Onboard-Diagnoseschnittstelle OBDI. Die gesamte Diagnosesitzung folgt dabei dem Diagnose-Kommunikationsprotokoll nach der ISO-Norm 14229. Es wird deshalb auf diesen Standard bezüglich der Offenbarung der Erfindung ausdrücklich Bezug genommen. Dieses Diagnoseprotokoll wird auch als Unified Diagnostic Service Protocol (kurz UDS-Dienst) bezeichnet. Zum Zweck der Erläuterung der Erfindung wird besonders auf die Variante ISO 14299-1 in der Version von 2020 hingewiesen. In dieser Variante wird die Eröffnung der Diagnosesitzung mit Zertifikat abgesichert. Die Nachricht zur Eröffnung der Diagnosesitzung beinhaltet das Zertifikat, mit dem sich das Diagnosegerät DT authentifiziert. Mit diesem Zertifikat wird bescheinigt, dass der Zertifikat-Eigentümer berechtigt ist den Diagnosetester einzusetzen und im Besitz des für die sichere Kommunikation nötigen öffentlichen Schlüssels ist wie auch des nötigen privaten Schlüssels. Der öffentliche Schlüssel ist im Zertifikat sichtbar, der private Schlüssel ist darin enthalten, aber verschlüsselt. Ebenfalls enthalten ist die Adresse desjenigen Steuergerätes, das getestet werden soll. Im gezeigten Fall ist die Adresse des Steuergerätes CU5 in der UDS-Nachricht angegeben. Es handelt sich also um ein Legacy-Steuergerät, das keine zusätzliche Sicherheitsausstattung beinhaltet. Die Onboard-Diagnoseschnittstelle OBDI empfängt die Nachricht ODS und leitet sie an die Verarbeitungseinheit PU1, also an das Gateway-Gerät weiter.

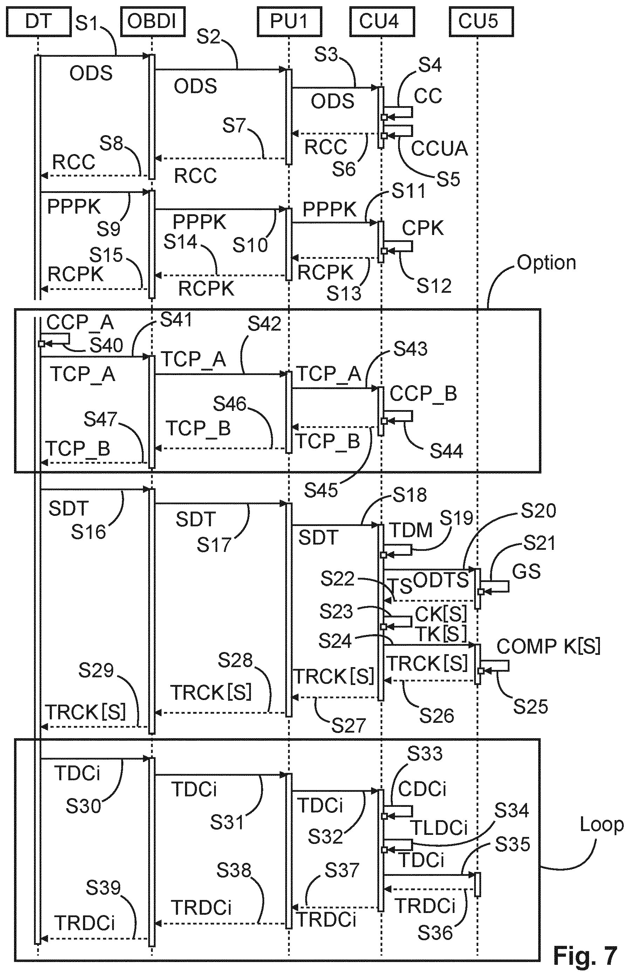

Das Diagnose-Protokoll soll möglichst von allen in einem Fahrzeug verbauten Steuergeräten unterstützt werden. So ist es dann möglich diese Steuergeräte zu testen und zu warten. Die Diagnosedienste spielen sich dabei auf einer anderen Ebene ab als z. B. das CAN-Protokoll, das selbst nur die erste Schicht, also die Bitübertragungsschicht (Physical Layer) und die zweite Schicht, also die Datensicherungsschicht (Data Link Layer) des OSI-Referenzmodells der Datenkommunikation verwendet. Der UDS-Dienst selbst kann in Teilen der Sitzungsschicht (Session Layer) und in anderen Teilen der Anwendungsschicht (Application Layer) des OSI-Modells zugeordnet werden. Eine Diagnosenachricht ist immer einheitlich aufgebaut und unterteilt sich in ein SID-Feld (Service-ID), ein Parameterfeld und ein Datenfeld. Dieses Nachrichtenformat ist in der Fig. 7 gezeigt. Das SID-Feld hat eine festgelegte Länge von 8 Bit. Das Parameterfeld hat eine Länge von 16 Bit. Der UDS-Standard erlaubt Botschaften mit einem Datenfeld beliebiger Länge. Die maximale Größe wird daher durch das jeweils eingesetzte Transportprotokoll vorgegeben, mit dem die UDS-Nachrichten übertragen werden. Beim häufig verwendeten ISO-Transportprotokoll nach ISO-Standard ISO 15765-2 sind zum Beispiel Botschaften bis zu einer Länge von 4095 Byte erlaubt.

Die Kommunikation auf Basis des Diagnoseprotokolls funktioniert nach dem Anfrage-Antwort-Prinzip. Somit können die in UDS definierten Dienstanforderungen an die Steuergeräte gesendet werden, welche die vorgegebenen UDS-Dienste unterstützen müssen. Der Diagnosetester startet mit einer Anfrage an das Steuergerät den Dienst und dieses sendet nach Beendigung des Dienstes eine positive oder negative Antwort zurück. Wenn die Ausführung des Dienstes länger dauert als die vorgegebene Laufzeit, dann muss das Steuergerät in regelmäßigen Abständen eine vorläufige Antwort (requestCorrectlyReceived-ResponsePending) senden. Diese bestätigt den Erhalt der Anfrage, teilt aber mit, dass die Ausführung noch andauert. Damit ist es zum Beispiel möglich, den Fehlerspeicher der einzelnen Steuergeräte abzufragen und zurückzusetzen. Ein weiterer UDS-Dienst betrifft z.B. die Firmwareaktualisierung eines Steuergerätes.

Der UDS-Standard in der Variante ISO 14229-1 (2018) definiert 27 Dienstanforderungen. Diese Diagnosenachrichten (Anfrage- und Antwortnachrichten) werden auf der Datensicherungsschicht des CAN-Protokolls in dem Nutzdatenfeld übertragen, wenn die Kommunikation über einen CAN-Bus geleitet wird. Wenn jetzt die UDS-Nachricht in den unteren Schichten auf dem Standard- oder erweiterten CAN-Bus Protokoll basiert, muss auf dem Diagnosetester und den beteiligten Steuergeräten ein Protokollstapel installiert sein, der es auf der Transportschicht (Transport Layer) gewährleistet, dass die Datenfelder einer Anzahl CAN-Bus Botschaften gesammelt werden, bis die vollständige UDS-Nachricht übertragen wurde. Dann können das beteiligte Steuergerät bzw. der Diagnosetester die UDS-Nachricht auswerten.

In dem UDS-Standard ISO 14229-1 (2018) sind die folgenden Diagnose-Dienstanforderungen spezifiziert, s. Tabelle 2.

**Tabelle 2**

| SID | Service | SID | Service |
|---|---|---|---|
| 0x10 | Diagnostic Session Control | 0x31 | Routine Control |
| 0x11 | ECU Reset | 0x34 | Request Download |
| 0x14 | Clear Diagnostic Information | 0x35 | Request Upload |
| 0x19 | Read DTS Information | 0x36 | Transfer Data |
| 0x22 | Read Data by Identifier | 0x37 | Request Transfer Exit |
| 0x23 | Read Memory by Address | 0x38 | Request File Transfer |
| 0x24 | Read Scaling Data by Identifier | 0x3D | Tester Present |
| 0x27 | Security Access | 0x3E | Write Memory by Address |
| 0x28 | Communication Control | 0x83 | Acccess Timing Parameters |
| 0x29 | Authentication | 0x84 | Secured Data Transmission |
| 0x2A | Read Data by Periodic Identifier | 0x85 | Control DTC Setting |
| 0x2C | Dynamically Define Data by Identifier | 0x86 | Response on Event |
| 0x2E | Input Output Control by Identifier | 0x87 | Link Control |
| 0x2F | | | |
| | | 0x7F | Negative Response SID |

Im gezeigten Beispiel von Fig. 6 empfängt das Gateway-Gerät PU1 die Eröffnungsnachricht im Schritt S2 von der Diagnoseschnittstelle T1. Diese entspricht der UDS-Nachricht mit SID 0x29. Mit ihr wird die Phase zur Authentifizierung des Diagnosetester DT eingeleitet. Das Gateway-Gerät PU1 wertet dann die vollständige UDS-Botschaft aus. Aufgrund der darin enthaltenen Steuergeräte-Adresse des zu testenden Steuergerätes CU5 leitet das Gateway-Gerät PU1 die Nachricht an den angeschlossenen Kommunikationsbus B1 weiter. Die UDS-Botschaft wird dabei in eine Vielzahl von CAN-Botschaften umgesetzt, die über den CAN-Bus B1 übertragen werden. Das Gateway-Gerät PU1 ist für diese Art der Umsetzung ausgelegt. Im Schritt S3 wird die Eröffnungsnachricht von dem abgesicherten Bremsen-Steuergerät CU4 in einer Anzahl von CAN-Botschaften übernommen. Das Bremsen-Steuergerät CU4 ist wie bereits beschrieben mit einer Gateway-Funktion GWF und einer zusätzlichen Sicherheitsausstattung SE versehen. Die Gateway-Funktion GWF enthält die Liste der CAN-Botschafts-Identifizierer, die für die im abgetrennten Teil B1' angeordneten Steuergeräte relevant sind. Wenn eine solche Botschaft bei dem Bremsen-Steuergerät CU4 eingeht, wird sie zunächst von dem abgesicherten CAN-Transceiver überprüft. Wird hier festgestellt, dass es sich um eine eingeschleuste Nachricht handelt, wird sie gleich unschädlich gemacht. Dies kann, wie eingangs beschrieben, durch Senden eines Error-Flags erfolgen. Zusätzlich werden die durchgelassenen Botschaften von der Firewall FW überprüft. Diese Prüfung findet im Schritt S4 und S5 statt nachdem die UDS-Nachricht zur Eröffnung der Diagnosesitzung eingegangen ist. Dabei wird im Schritt S4 das in der UDS-Nachricht enthaltene Zertifikat auf Echtheit überprüft. Dazu wird auch das HSM-Modul HSM eingesetzt. Ist hier die Echtheit des Zertifikats nicht nachgewiesen, wird die Diagnosesitzung nicht eröffnet. Im Schritt S5 wird die in der UDS-Nachricht übermittelte Steuergeräte-Information inklusive Adresse und Typ überprüft. Ist hier eine Adresse oder ein anderer Typ des angesprochenen Legacy-Steuergerätes genannt, wird die Diagnosesitzung nicht eröffnet. Somit wehrt die Firewall FW in Verbindung mit dem HSM-Modul und dem abgesicherten CAN-Transceiver z.B. Spoofing-Angriffe ab.

Wurde die Anfrage des Diagnosetesters mit Zertifikat verifiziert und die zugrundeliegenden CAN-Nachrichten nicht als eingeschleust entlarvt, so erfolgt nach dem Schritt S5 die Bestätigung der Korrektheit des überprüften Zertifikats. Zunächst sendet das abgesicherte Bremsen-Steuergerät CU4 die Bestätigung an das zentrale Gateway-Gerät PU1. Das zentrale Gateway-Gerät PU1 leitet diese Bestätigung ggfs. nach Umsetzung in das für den Bus B5 passende Format an die Diagnoseschnittstelle weiter. Die Onboard-Diagnoseschnittstelle OBDI leitet die Botschaft mit der Bestätigung der Echtheit des Zertifikats an den Diagnosetester DT weiter.

Dieser führt dann den nächsten Schritt zur Eröffnung der Diagnosesitzung durch. Dieser Schritt ist mit Bezugszeichen S9 bezeichnet. Dabei wird vom Diagnosetester DT eine Aufforderung zum Beweis seines Besitzes des privaten Schlüssels an die Diagnoseschnittstelle OBDI gesendet. In dieser UDS-Nachricht ist eine Signatur enthalten, die der Diagnosetesters DT mit dem privaten Schlüssel berechnet hat. Das angesprochene Steuergerät soll verifizieren, dass der Diagnosetester DT im Besitz des privaten Schlüssels ist. Diese UDS-Nachricht wird im Schritt S10 von der Diagnoseschnittstelle OBDI an das zentrale Gateway-Gerät PU1 gesendet. Von dort wird sie wiederum im Schritt S11 an das Bremsen-Steuergerät CU4 gesendet. Das Bremsen-Steuergerät CU4 prüft die Echtheit der berechneten Signatur mit Hilfe des öffentlichen Schlüssels des Diagnosetesters DT. Dazu kann das Hardware Sicherheitsmoduls HSM eingesetzt werden. Als Beispiel für eine Authentifizierung auf Basis dieses Schlüsselpaares wird das SSH-Authentifizierungsprotokoll genannt. Dieses ist in Request for Comment RFC 4252 beschrieben. Das Ergebnis der Schlüsselüberprüfung wird in den Schritten S13 bis S15 an den Diagnosetester DT zurück übertragen. Dieser Schritt der Schlüsselüberprüfung ist erforderlich, weil das Zertifikat öffentlich ist und deshalb leicht in die Hände von Angreifern geraten kann. Deshalb muss überprüft werden, ob der Besitzer des Zertifikats tatsächlich den private key kennt. Diese Prüfung erfolgt in den Schritten S9 bis S15.

Bei erfolgter Verifikation des Besitzes des privaten Schlüssels startet der Diagnosetester DT eine Diagnosesitzung. In den Schritten S16 bis S18 wird die Diagnosenachricht zum Starten der Diagnosesitzung an das abgesicherten Steuergerät CU4 kaskadiert. Dieses Bremsen-Steuergerät CU4 wandelt diese UDS-Nachricht im Schritt S19 nun nach der Authentifizierung des Diagnosetesters DT in das für das zu testende Steuergerät CU5 gültige Format um. Dies hängt von dem Stand des Diagnosetester DT ab und kann entfallen, wenn der Diagnosetester DT die UDS-Nachricht in dem für das Legacy-Steuergerät CU5 verständlichen Format bereits liefert. Es entstehen so im Schritt S20 die CAN-Botschaften, die das Legacy-Steuergerät CU5 zum Starten der Diagnosesitzung erwartet. Die hier gesendete Diagnosenachricht zum Starten der Diagnosesitzung entspricht der UDS-Nachricht mit SID 0x27. Das Steuergerät CU5 zur Abstandsregelung erzeugt daraufhin einen sogenanntes "Seed". Das ist ein durch einen Zufallsgenerator erzeugter String von Zeichen. Dies erfolgt im Schritt S21. Ein Teil dieses Strings wird im Schritt S22 an das abgesicherte Steuergerät CU4 im Rahmen einer Challenge-Response-Authentifizierung als Challenge gesendet. Das Bremsen-Steuergerät CU4 ergänzt den gelieferten Teil des Strings um seinen privaten Schlüssel und berechnet damit nach dem vereinbarten kryptologischen Algorithmus den passenden Schlüssel. Diese Berechnung kann ebenfalls im Hardware-Sicherheitsmodul HSM erfolgen. Dies erfolgt im Schritt S23. Der berechnete Schlüssel wird im Schritt S24 an das Legacy-Steuergerät CU5 übertragen. Im Schritt S25 vergleicht das Legacy-Steuergerät CU5 den empfangenen Schlüssel mit dem von ihm selbst berechneten Schlüssel. Es nutzt dazu denselben Algorithmus, der mit dem generierten Seed von Schritt S21 arbeitet. Das Ergebnis des Schlüsselvergleichs wird in den Schritten S26 bis S29 zum Diagnosetester DT zurückgeliefert. War der Start der Diagnosesitzung erfolgreich, sendet der Diagnosetester DT den ersten Diagnosebefehl im Schritt S30. Dieser Diagnosebefehl wird entlang des gleichen Pfades geleitet und gelangt nach den Schritten S31 und S32 zu dem abgesicherten Steuergerät CU4. Die Firewall-Funktion FW in dem Bremsen-Steuergerät CU4 überprüft den Diagnosebefehl im Schritt S33. In dieser Prüfung findet insbesondere eine Prüfung statt, ob es sich um einen als gefährlich eingestuften Diagnosebefehl handelt. Darunter fallen insbesondere die Diagnosebefehle "Read Memory by Address" mit SID 0x23 und "Write Memory by Address" mit SID 0x3D, "Request Download" mit SID 0x34 und "Request Upload" mit SID 0x35 die für ein Firmware-Update benutzt werden können. Solche Diagnosebefehle werden abgeblockt und werden nicht ausgeführt. Handelt es sich nicht um einen als gefährlich eingestuften Diagnosebefehl, erfolgt im Schritt S34 eine Umwandlung in das für das Legacy-Steuergerät CU5 erforderliche Legacy-Format. In diesem Format wird der Diagnosebefehl im Schritt S35 an das Legacy-Steuergerät CU5 gesendet. Der Diagnosebefehl wird dann von dem Legacy-Steuergerät CU5 abgearbeitet. Das Ergebnis der Prüfung wird im Schritt S36 an das Bremsen-Steuergerät CU4 übertragen. Von dort wird es in den Schritten S37 bis S39 an den Diagnosetester DT weitergeleitet. Üblicherweise werden während der eröffneten Diagnosesitzung weitere Diagnosebefehle vom Diagnosetester DT gesendet und von dem Legacy-Steuergerät CU5 ausgeführt. Dies ist in der Fig. 5 durch die Umrandung der Schritte S30 bis S39 angedeutet. Dieser Rahmen wird zur Verdeutlichung deshalb als "Loop", entsprechend Schleife bezeichnet.

Eine optionale Erweiterung ist in der Fig. 6 ebenfalls eingezeichnet, umrandet und mit der Beschriftung "Option" versehen. Während bei der oben beschriebenen Methode das abgesicherte Steuergerät CU4 nach der Zertifikat-basierten Authentifizierung des Diagnosetesters DT als Diagnose-Client arbeitet und in den Schritten S16 bis S29 die für Legacy-Steuergeräte übliche Challenge-Response-Authentifizierung durchführt, kann nach der optionalen Erweiterung eine zusätzliche Authentifizierungsmethode eingesetzt werden, um die Angriffsmöglichkeiten weiter zu beschränken. Dabei wird dann nach Eröffnung der Diagnosesitzung in den Schritten S40 bis S47 die gesamte Diagnosekommunikation zusätzlich abgesichert. Dabei wird zu jedem während der Sitzung gesendeten Diagnosebefehl eine nochmalige Authentifizierung der Nachrichten des Diagnosetesters DT durchgeführt. Dies geschieht indem jedem Diagnosebefehl eine Signatur hinzugefügt wird. Das abgesicherte Steuergerät CU4 verifiziert, ob die Signatur korrekt ist. Die UDS-Nachricht, mit der die Vereinbarung des Sitzungsschlüssels erfolgt, entspricht der UDS-Nachricht mit SID 0x84.

Dabei wird im Schritt S40 vom Diagnosetester DT ein Diagnosesitzungsschlüssel basierend auf einem vereinbarten Ausgangswert berechnet. Im Schritt S41 wird ein vereinbarter Teil eines Sitzungsgeheimnis an die Diagnoseschnittstelle OBDI übertragen. Diese leitet die Nachricht mit dem Teil des Sitzungsgeheimnisses im Schritt S42 an das zentrale Gateway PU1 weiter. Im Schritt S43 sendet das Gateway-Gerät PU1 die Nachricht an das Bremsen-Steuergerät CU4. Darin erfolgt im Schritt S44 die Berechnung des Sitzungsschlüssels unter Benutzung des für dieses Bremsen-Steuergerät vereinbarten Teils des Sitzungsgeheimnisses. Die Durchführung der Berechnung des Sitzungsschlüssels wird dann in den Schritten S45 bis S47 zurückkommuniziert. Diese Art der Authentifizierung würde dann im abgesicherten Bremsen-Steuergerät CU4 im jeweiligen Schritt S33 erfolgen. Die Kommunikation gemäß der Option zur Berechnung des "Shared Keys" in den Schritten S40 bis S47 kann nach der Art der bekannten "Diffie-Hellman Key Exchange"-Methode erfolgen.

Um die an den Fahrzeug-Bus B1 angeschlossenen Steuergeräte ebenfalls gegen Angriffe von Innen und Außen abzusichern, ist es erforderlich diese mit sicheren CAN-Transceivern auszustatten. Wie eingangs beschrieben können die sicheren CAN-Transceiver eingeschleuste Botschaften schon mit Maßnahmen auf der Datensicherungsschicht erkennen und unschädlich machen. Eine alternative Möglichkeit zur Absicherung besteht darin, die an Fahrzeug-Bus B1 angeschlossenen Steuergeräte mit der sogenannten Secure Onboard-Communication (SecOC) auszustatten. Diese Methode gewährleistet die authentifizierte Nachrichtenübertragung für die Fahrzeug-interne Kommunikation. Dies entspricht der beschriebenen "Diffie-Hellman Key Exchange"-Methode, die allerdings eine Maßnahme im Zusammenhang mit dem UDS-Diagnoseprotokoll darstellt, also auf den höheren Schichten des OSI-Referenzmodells.

Um sicherzustellen, dass keine unberechtigten Modifikationen an dem in dem abgesicherten Bremsen-Steuergerät CU4 installierten Software-Stapel möglich sind, ist es vorteilhaft, wenn dieses Bremsen Steuergerät CU4 mit einem Secure Boot Manager und einem Secure Update Manager für die Absicherung einer Software-Aktualisierung ausgestattet wird. Zu diesem Zweck gibt es kommerzielle Angebote für Embedded Software Stapel. Die AUTOSAR-Organisation hat diesbezüglich Anforderungen und Regeln aufgestellt, die solche Embedded Software Stapel erfüllen sollten.

Optional könnte die Firewall FW in dem Bremsen-Steuergerät CU4 mit einer Anomalie-Erkennung ausgebildet werden, die meldet, wenn verdächtige Meldungen an eines der Legacy-Steuergeräte gesendet wurden, die in dem abgetrennten Teil des Fahrzeug-Busses B1' vernetzt sind. Die Firewall könnte dann eine Warnmeldung an den Hersteller des Fahrzeuges oder an eine Behörde senden. Diese Warnmeldung kann über das On-Board-Kommunikationsgerät KU1 abgesendet werden oder über das On-Board-Kommunikationsgerät KU2.

Mit dem skizzierten Ansatz kann ein Fahrzeughersteller die Einhaltung von der Richtlinie UN-ECE R 155 nachweisen, ohne alle Komponenten im Fahrzeug gleichzeitig auf den neuesten Sicherheitsstandard zu bringen. Die allermeisten Angriffe werden mit der vorgestellten Lösung erkannt. Das verbleibende Restrisiko für kann für ein nicht mit einem vollautonomen Fahrer ausgestatteten Fahrzeug als "akzeptabel" eingestuft werden.

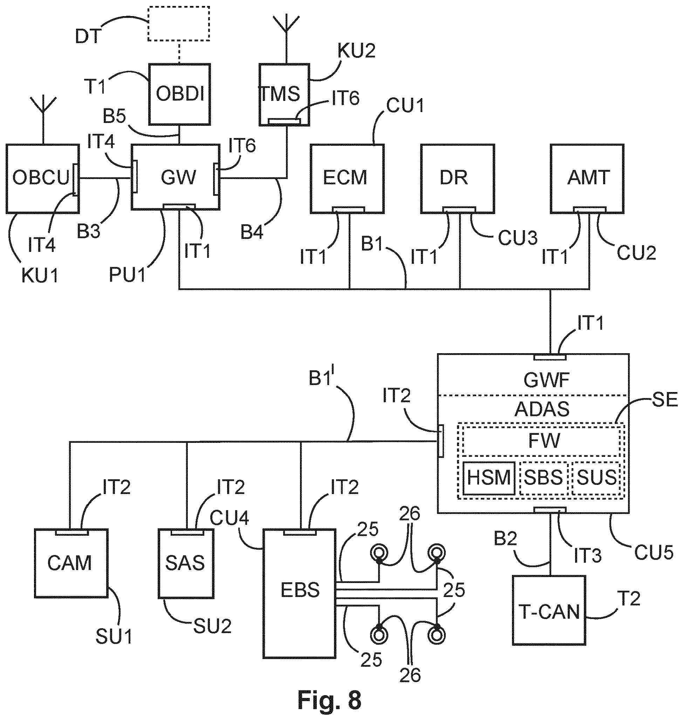

Die Fig. 8 zeigt noch ein zweites Ausführungsbeispiel eines Blockdiagramms für die elektronische Ausstattung eines Zugfahrzeuges. Darin bezeichnen die gleichen Bezugszahlen die gleichen Komponenten wie in Fig. 2. Der Unterschied besteht in einer Vertauschung der beiden Steuergeräte CU4 und CU5. In Fig. 8 ist das abgesicherte Steuergerät das Steuergerät, das die Abstandregelung zu vorausfahrenden Fahrzeugen durchführt und den Radar-Sensor beinhaltet. Als Legacy-Steuergerät in dem abgetrennten Teil des Fahrzeug-Busses B1' wird ein konventionelles Bremsen-Steuergerät CU4 eingesetzt. Durch diese Anordnung ist es wiederum möglich den Steuergeräte-Verbund nach den Vorgaben der UN-ECE-Richtlinie R155 abgesichert zu betreiben, obwohl das Bremsen-Steuergerät noch keine Zusatz-Sicherheitsausstattung aufweist.

Es ist auch möglich im abgetrennten Teil des Fahrzeug-Bus B1' andere und/oder weitere Legacy-Steuergeräte zu vernetzen, die dann ebenfalls vor den beschriebenen-Angriffen, insbesondere Spoofing-Angriffen geschützt sind.

Alle hierin erwähnten Beispiele wie auch bedingte Formulierungen sind ohne Einschränkung auf solche speziell angeführten Beispiele zu verstehen. So wird es zum Beispiel von Fachleuten anerkannt, dass das hier dargestellte Blockdiagramm eine konzeptionelle Ansicht einer beispielhaften Schaltungsanordnung darstellt. In ähnlicher Weise ist zu erkennen, dass ein dargestelltes Flussdiagramm, Zustandsübergangsdiagramm, Pseudocode und dergleichen verschiedene Varianten zur Darstellung von Prozessen darstellen, die im Wesentlichen in computerlesbaren Medien gespeichert und somit von einem Computer oder Prozessor ausgeführt werden können.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise wird das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform, die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein oder ein Teil, der über das Betriebssystem ausgeführt wird.

Die Offenbarung ist nicht auf die hier beschriebenen Ausführungsbeispiele beschränkt. Es gibt Raum für verschiedene Anpassungen und Modifikationen, die der Fachmann aufgrund seines Fachwissens als auch zu der Offenbarung zugehörend in Betracht ziehen würde.

### Bezugszeichenliste (Teil der Beschreibung)

- 10: Anhängerfahrzeug
- 12: Stütze
- 14: Königszapfen
- 20: Zugfahrzeug
- 22: Ankoppelelement
- 24: Antriebseinheit
- 25, 25': Bremsleitung
- 26, 26': Betriebsbremse
- 100: CAN-Knoten
- 120: CAN-Transceiver
- 130: Abschlusswiderstand
- 140: CAN-Controller
- 150: verdrillte Zweidrahtleitung
- 160: Host

- B1: Fahrzeug-Kommunikationsbus erster Teil
- B1': Fahrzeug-Kommunikationsbus abgetrennter Teil
- B2: 2. Kommunikationsbus
- B3: 3. Kommunikationsbus
- B4: 4. Kommunikationsbus
- B5: 5. Kommunikationsbus
- DT: Diagnosetester
- IT1 - IT6: verschiedene Kommunikationsschnittstellen
- KU1: On-Board Kommunikationsmodul
- KU2: Telematik-Modul
- CU1: elektronisches Motor-Steuergerät
- CU2: elektronisches Getriebe-Steuergerät
- CU3: elektronisches Retarder-Steuergerät
- CU4: elektronisches Bremsen-Steuergerät
- CU5: elektronisches Fahrerassistenzsystem
- CU6: elektronisches Bremsen-Steuergerät
- FW: Firewall
- HSM: Hardware Security Modul
- OBDI: Diagnoseschnittstelle
- PU1: elektronische Verarbeitungseinheit (Gateway)
- SE: Sicherheitsausstattung
- S1-S47: Schritte beim Ablauf einer Diagnosesitzung
- SU1: Kamera
- SU2: Lenkwinkelsensor
- T1: Diagnosestecker
- T2: Anschlussbuchse für Anhängerbussystems
- T2': Anschlussstecker für Anhängerbussystems

## Patentansprüche

1. Vorrichtung zur abgesicherten Kommunikation zwischen Steuergeräten in einem Fahrzeug (20), wobei die Steuergeräte (CU1 - CU4) jeweils mit wenigstens einer Kommunikationsschnittstelle (IT1) ausgestattet sind, über die sie an einen ersten Teil eines drahtgebundenen Fahrzeug-Bussystems (B1) zum Austausch von Nachrichten angeschlossen sind, **dadurch gekennzeichnet, dass** wenigstens ein abgesichertes Steuergerät (CU4, CU5) vorgesehen ist, das an das Fahrzeug-Bussystem (B1) angeschlossen ist, wobei das abgesicherte Steuergerät (CU4, CU5) mit wenigstens einer weiteren Kommunikationsschnittstelle (IT2) versehen ist, an die ein abgetrennter Teil des Fahrzeug-Bussystems (B1') angeschlossen ist, und, dass das abgesicherte Steuergerät (CU4, CU5) mit einer Gateway-Funktion (GWF) und einer Sicherheitsausstattung (SE) versehen ist, die wenigstens die Funktion einer Firewall (FW) erfüllt, durch die Angriffe aus dem ersten Teil des Fahrzeug-Bussystems (B1) auf eines der Steuergeräte (CU5, CU4) in dem abgetrennten Teil des Fahrzeug-Bussystems (B1') abgewehrt werden, wobei die Kommunikationsschnittstelle (IT1) des abgesicherten Steuergerätes (CU4, CU5) eine abgesicherte CAN-Bus-Kommunikationsschnittstelle (IT1) ist, die so ausgelegt ist, dass sie Angriffe durch eingeschleuste Nachrichten seitens eines manipulierten Steuergerätes im ersten Teil des Fahrzeug-Bussystems (B1) abwehren kann.

2. Vorrichtung nach einem der vorhergehenden Ansprüche, **dadurch gekennzeichnet, dass** die Gateway-Funktion (GWF) des abgesicherten Steuergeräts (CU4, CU5) sich auf das Routing der Nachrichten zwischen den Teilnehmern in dem ersten und dem abgetrennten Teil des Fahrzeug-Bussystems (B1, B1') bezieht.

3. Vorrichtung nach Anspruch 1 oder 2, wobei das drahtgebundene Fahrzeug-Bussystem (B1) einem CAN-Bussystem entspricht, entsprechend Controller Area Network, insbesondere in der Variante nach dem SAE J1939 Standard.

4. Vorrichtung nach Anspruch 3, **dadurch gekennzeichnet, dass** die Steuergeräte (CU1-CU4) in dem ersten Teil des Fahrzeug-Bussystems (B1) mit einer abgesicherten CAN-Bus-Kommunikationsschnittstelle (IT1) ausgestattet sind, wobei die abgesicherte CAN-Bus-Kommunikationsschnittstelle (IT1) so ausgelegt ist, das sie auf Angriffe durch eingeschleuste Nachrichten seitens eines manipulierten Steuergerätes im ersten Teil des Fahrzeug-Bussystems (B1) abwehren kann.

5. Vorrichtung nach Anspruch 4, **dadurch gekennzeichnet, dass** die abgesicherte CAN-Bus-Kommunikationsschnittstelle (IT1) mit einem abgesichertem CAN-Transceiver (120) ausgestattet ist oder mit einem Software-Stapel versehen ist, der für die Secured Onboard-Kommunikation ausgelegt ist.

6. Vorrichtung nach einem der vorhergehenden Ansprüche, **dadurch gekennzeichnet, dass** das abgesicherte Steuergerät (CU4, CU5) ein Bremsen-Steuergerät EBS ist, entsprechend "Electronic Braking System" und die in den abgetrennten Teil des Fahrzeug-Bussystems (B1') verschobenen Steuergeräte (CU5, CU4) wenigstens ein Fahrerassistenzsystem-Steuergerät (CU5) oder ein Umgebungserfassungssystem-Steuergerät, an das wenigstens ein Umgebungserfassungssensor (SU1) angeschlossen ist, betreffen.

7. Elektronisches Steuergerät, mit einer ersten Kommunikationsschnittstelle (IT1) über die das Steuergerät (CU4, CU5) an einen ersten Teil eines drahtgebundenen Fahrzeug-Bussystems (B1) zum Austausch von Nachrichten anschließbar ist, **dadurch gekennzeichnet, dass** das Steuergerät (CU4, CU5) wenigstens eine weitere Kommunikationsschnittstelle (IT2) aufweist, an die ein abgetrennter Teil des Fahrzeug-Bussystems (B1') anschließbar ist, wobei das Steuergerät (CU4, CU5) mit einer Gateway-Funktion und einer Sicherheitsausstattung versehen ist, die wenigstens die Funktion einer Firewall (FW) erfüllt, zu dem Zweck Angriffe aus dem ersten Teil des Fahrzeug-Bussystems (B1) auf eines der Steuergeräte (CU5, CU4) in dem abgetrennten Teil des Fahrzeug-Bussystems (B1') abzuwehren, wobei die Kommunikationsschnittstelle (IT1) des abgesicherten Steuergerätes (CU4, CU5) eine abgesicherte CAN-Bus-Kommunikationsschnittstelle (IT1) ist, die so ausgelegt ist, dass sie Angriffe durch eingeschleuste Nachrichten seitens eines manipulierten Steuergerätes im ersten Teil des Fahrzeug-Bussystems (B1) abwehren kann.

8. Elektronisches Steuergerät nach Anspruch 7, **dadurch gekennzeichnet, dass** die Sicherheitsausstattung (SE) weiterhin eine Softwareausstattung betrifft, mit der die Funktion eines abgesicherten Bootvorgangs ermöglicht wird.

9. Elektronisches Steuergerät nach Anspruch 7 oder 8, **dadurch gekennzeichnet, dass** die Gateway-Funktion (GWF) des Steuergeräts (CU4, CU5) sich auf das Routing der Nachrichten zwischen den Teilnehmern in dem ersten und dem abgetrennten Teil des Fahrzeug-Bussystems (B1') bezieht.

10. Elektronisches Steuergerät nach einem der Ansprüche 7 bis 9, wobei die erste (IT1) und wenigstens eine weitere Kommunikationsschnittstelle (IT2) einer CAN-Bus-Kommunikationsschnittstelle entspricht, entsprechend Controller Area Network, insbesondere in der Variante nach dem SAE J1939 Standard.

11. Elektronisches Steuergerät nach Anspruch 10, **dadurch gekennzeichnet, dass** die CAN-Bus-Kommunikationsschnittstelle (IT1) für den Anschluss an den ersten Teil des Fahrzeug-Bussystems (B1) mit einem abgesicherten CAN-Transceiver (120) ausgestattet ist oder mit einem Software-Stapel versehen ist, der für die Secured Onboard-Kommunikation SecOC ausgelegt ist, der Angriffe durch eingeschleuste Nachrichten seitens eines manipulierten Steuergerätes im ersten Teil des Fahrzeug-Bussystems (B1) abwehren kann.

12. Elektronisches Steuergerät nach Anspruch 10 oder 11, **dadurch gekennzeichnet, dass** die Sicherheitsausstattung (SE) weiterhin eine Funktion zur Zertifikat-basierten Authentifizierung eines an ein Steuergerät oder ein Gateway-Gerät (PU1) des ersten Teils des Fahrzeug-Bussystems (B1) angeschlossenen externen Diagnosetesters (DT) aufweist.

13. Elektronisches Steuergerät nach Anspruch 12, **dadurch gekennzeichnet, dass** die Sicherheitsausstattung (SE) ein HSM-Modul (HSM) betrifft, entsprechend Hardware Security Modul zur Gewährleistung einer sicheren Authentifizierung wenigstens des an ein Steuergerät oder ein Gateway-Gerät (PU1) des ersten Teils des Fahrzeug-Bussystems (B1) angeschlossenen externen Diagnosetesters (DT).

14. Elektronisches Steuergerät nach einem der Ansprüche 7 bis 13, **dadurch gekennzeichnet, dass** die Sicherheitsausstattung (SE) weiterhin die Funktion eines Diagnose-Client-Steuergeräts aufweist zur Seed-Key-Authentifizierung eines an den abgetrennten Teil des Fahrzeug-Bussystems (B1') angeschlossenen Steuergerätes (CU4, CU5) bzgl. des Ausführens von Diagnosefunktionen, die durch die Kommunikation mit dem durch Zertifikat verifizierten externen Diagnosetester (DT) aufgerufen werden.

15. Elektronisches Steuergerät nach einem der Ansprüche 7 bis 14, **dadurch gekennzeichnet, dass** die Sicherheitsausstattung (SE) weiterhin die Funktion aufweist, dass bestimmte als gefährlich eingestufte, von dem externen Diagnosetester (DT) eintreffende Diagnosebefehle, die an das zu testende Steuergerät (CU5, CU4) in dem abgetrennten Teil des Fahrzeug-Bussystems (B1') gerichtet sind, insbesondere in Bezug auf das Lesen und Schreiben von für die Ausführung von Computerprogrammen allokierten Speicherbereichen oder für die Permanentspeicherung von Computerprogrammen in nichtflüchtigen Speicherbereichen unterbunden werden.

16. Elektronisches Steuergerät nach einem der Ansprüche 7 bis 15, **dadurch gekennzeichnet, dass** die Sicherheitsausstattung (SE) weiterhin die Funktion aufweist, die eingehenden Diagnosebefehle, einzeln oder gruppenweise zu verifizieren, in dem eine Authentifizierung des externen Diagnosetesters (DT) jeweils erneut durchgeführt wird, bevor der betreffende Diagnosebefehl an das zu testende Steuergerät in dem abgetrennten Teil des Fahrzeug-Bussystems weitergeleitet wird.

17. Elektronisches Steuergerät nach einem der Ansprüche 7 bis 16, wobei die Sicherheitsausstattung weiterhin die Funktion eines abgesicherten Software-Update-Vorgangs aufweist, in dem die in dem nichtflüchtigen Speicherbereich gespeicherten Computerprogramme ausgetauscht werden.

18. Elektronisches Steuergerät nach einem der Ansprüche 7 bis 17, wobei das elektronische Steuergerät (CU4) ein Bremsen-Steuergerät EBS, entsprechend "Electronic Braking System" oder ein Steuergerät (CU5) für ein Abstandsregelsystem ist oder ein Steuergerät für ein automatisches Fahrsystem ist.

19. Fahrzeug mit einer Antriebseinheit (24) und einem Bremssystem mit elektronischem Steuergerät (CU4), **dadurch gekennzeichnet, dass** das Fahrzeug (20) eine Vorrichtung nach einem der Ansprüche 1 bis 6 aufweist.

## Claims

1. Device for secured communication between control units in a vehicle (20), each of the control units (CU1 - CU4) being equipped with at least one communication interface (IT1) by means of which they are connected to a first part of a wired vehicle bus system (B1) for the exchange of messages, **characterized in that** at least one secured control unit (CU4, CU5) is provided which is connected to the vehicle bus system (B1), the secured control unit (CU4, CU5) being provided with at least one further communication interface (IT2) to which a separate part of the vehicle bus system (B1') is connected, and **in that** the secured control unit (CU4, CU5) is provided with a gateway function (GWF) and security equipment (SE) which fulfills at least the function of a firewall (FW) by means of which attacks from the first part of the vehicle bus system (B1) on one of the control units (CU5, CU4) in the separate part of the vehicle bus system (B1') are repelled, the communication interface (IT1) of the secured control unit (CU4, CU5) being a secured CAN bus communication interface (IT1) that is designed in such a way that it can repel attacks by injected messages from a manipulated control unit in the first part of the vehicle bus system (B1).

2. Device according to any of the preceding claims, **characterized in that** the gateway function (GWF) of the secured control unit (CU4, CU5) relates to the routing of the messages between the participants in the first and the separate part of the vehicle bus system (B1, B1').

3. Device according to claim 1 or 2, wherein the wired vehicle bus system (B1) corresponds to a CAN bus system (controller area network), in particular in the variant according to the SAE J1939 standard.

4. Device according to claim 3, **characterized in that** the control units (CU1-CU4) in the first part of the vehicle bus system (B1) are equipped with a secured CAN bus communication interface (IT1), the secured CAN bus communication interface (IT1) being designed to be able to repel on attacks by injected messages from a manipulated control unit in the first part of the vehicle bus system (B1).

5. Device according to claim 4, **characterized in that** the secured CAN bus communication interface (IT1) is equipped with a secured CAN transceiver (120) or is provided with a software stack that is designed for secured onboard communication.

6. Device according to any of the preceding claims, **characterized in that** the secured control unit (CU4, CU5) is a brake control unit EBS (electronic braking system) and the control units (CU5, CU4) that are moved into the separate part of the vehicle bus system (B1') include at least one driver assistance system control unit (CU5) or an environment sensing system control unit to which at least one environment sensing sensor (SU1) is connected.

7. Electronic control unit, having a first communication interface (IT1) by means of which the control unit (CU4, CU5) can be connected to a first part of a wired vehicle bus system (B1) for the exchange of messages, **characterized in that** the control unit (CU4, CU5) has at least one further communication interface (IT2) to which a separate part of the vehicle bus system (B1') can be connected, the control unit (CU4, CU5) being provided with a gateway function and security equipment which fulfills at least the function of a firewall (FW) for the purpose of repelling attacks from the first part of the vehicle bus system (B1) on one of the control units (CU5, CU4) in the separate part of the vehicle bus system (BT), the communication interface (IT1) of the secured control unit (CU4, CU5) being a secured CAN bus communication interface (IT1) that is designed in such a way that it can repel attacks by injected messages from a manipulated control unit in the first part of the vehicle bus system (B1).

8. Electronic control unit according to claim 7, **characterized in that** the security equipment (SE) also includes software that enables the function of a secured boot process.

9. Electronic control unit according to claim 7 or 8, **characterized in that** the gateway function (GWF) of the control unit (CU4, CU5) relates to the routing of the messages between the participants in the first and the separate part of the vehicle bus system (B1').

10. Electronic control unit according to any of claims 7 to 9, wherein the first communication interface (IT1) and at least one further communication interface (IT2) corresponds to a CAN bus communication interface (controller area network), in particular in the variant according to the SAE J1939 standard.

11. Electronic control unit according to claim 10, **characterized in that** the CAN bus communication interface (IT1) for connection to the first part of the vehicle bus system (B1) is equipped with a secured CAN transceiver (120) or is provided with a software stack which is designed for secured onboard communication SecOC and can repel attacks by injected messages from a manipulated control unit in the first part of the vehicle bus system (B1).

12. Electronic control unit according to claim 10 or 11, **characterized in that** the security equipment (SE) further has a function for certificate-based authentication of an external diagnostic tester (DT) that is connected to a control unit or a gateway unit (PU1) of the first part of the vehicle bus system (B1).

13. Electronic control unit according to claim 12, **characterized in that** the security equipment (SE) includes an HSM module (HSM) (hardware security module) to ensure secure authentication of at least the external diagnostic tester (DT) that is connected to a control unit or a gateway unit (PU1) of the first part of the vehicle bus system (B1).

14. Electronic control unit according to any of claims 7 to 13,
**characterized in that** the security equipment (SE) further has the function of a diagnostic client control unit for seed key authentication of a control unit (CU4, CU5) that is connected to the separate part of the vehicle bus system (B1') with regard to the execution of diagnostic functions which are called up by communication with the certificate-verified external diagnostic tester (DT).

15. Electronic control unit according to any of claims 7 to 14,
**characterized in that** the security equipment (SE) further has the function of preventing certain diagnostic commands which are received from the external diagnostic tester (DT) and addressed to the control unit (CU5, CU4) to be tested in the separate part of the vehicle bus system (BT) and which are classified as dangerous, in particular with regard to reading and writing memory regions allocated for the execution of computer programs or for the permanent storage of computer programs in non-volatile memory regions.

16. Electronic control unit according to any of claims 7 to 15,
**characterized in that** the security equipment (SE) further has the function of verifying incoming diagnostic commands, individually or in groups, in which the external diagnostic tester (DT) is re-authenticated each time before the relevant diagnostic command is forwarded to the control unit to be tested in the separate part of the vehicle bus system.

17. Electronic control unit according to any of claims 7 to 16, wherein the security equipment further has the function of a secured software update process in which the computer programs stored in the non-volatile memory region are exchanged.

18. Electronic control unit according to any of claims 7 to 17, wherein the electronic control unit (CU4) is a brake control unit EBS (electronic braking system) or a control unit (CU5) for a distance control system or a control unit for an automatic driving system.

19. Vehicle comprising a drive unit (24) and a braking system having an electronic control unit (CU4), **characterized in that** the vehicle (20) has a device according to any of claims 1 to 6.

## Revendications

1. Dispositif de communication sécurisée entre des appareils de commande dans un véhicule (20), dans lequel les appareils de commande (CU1-CU4) sont équipés respectivement d'au moins une interface de communication (IT1) par l'intermédiaire de laquelle ils sont raccordés à une première partie d'un système de bus de véhicule (B1) filaire pour l'échange de messages, **caractérisé en ce qu'il** est prévu au moins un appareil de commande (CU4, CU5) sécurisé qui est raccordé au système de bus de véhicule (B1), dans lequel l'appareil de commande (CU4, CU5) sécurisé est pourvu d'au moins une interface de communication (IT2) supplémentaire à laquelle est raccordée une partie séparée du système de bus de véhicule (B1'), et **en ce que** l'appareil de commande (CU4, CU5) sécurisé est pourvu d'une fonction de passerelle (GWF) et d'un équipement de sécurité (SE) qui remplit au moins la fonction d'un pare-feu (FW) par lequel des attaques provenant de la première partie du système de bus de véhicule (B1) sur l'un des appareils de commande (CU5, CU4) dans la partie séparée du système de bus de véhicule (B1') sont repoussées, dans lequel l'interface de communication (IT1) de l'appareil de commande (CU4, CU5) sécurisé est une interface de communication de bus CAN (IT1) sécurisée qui est conçue de telle sorte qu'elle peut repousser des attaques de messages infiltrés de la part d'un appareil de commande manipulé dans la première partie du système de bus de véhicule (B1).

2. Dispositif selon l'une des revendications précédentes,
**caractérisé en ce que** la fonction de passerelle (GWF) de l'appareil de commande (CU4, CU5) sécurisé se rapporte au routage des messages entre les abonnés de la première partie du système de bus de véhicule (B1, B1') et de la partie séparée de celui-ci.

3. Dispositif selon la revendication 1 ou 2, dans lequel le système de bus de véhicule (B1) filaire correspond à un système de bus CAN, correspondant à réseau local de commande (Controller Area Network), en particulier dans la variante selon la norme SAE J1939.

4. Dispositif selon la revendication 3, **caractérisé en ce que** les appareils de commande (CU1-CU4) dans la première partie du système de bus de véhicule (B1) sont équipés d'une interface de communication de bus CAN (IT1) sécurisée, dans lequel l'interface de communication de bus CAN (IT1) sécurisée est conçue de telle sorte qu'elle peut repousser des attaques de messages infiltrés de la part d'un appareil de commande manipulé dans la première partie du système de bus de véhicule (B1).

5. Dispositif selon la revendication 4, **caractérisé en ce que** l'interface de communication de bus CAN (IT1) sécurisée est équipée d'un émetteur-récepteur CAN (120) sécurisé ou est pourvue d'une pile de logiciels conçue pour la communication embarquée sécurisée.

6. Dispositif selon l'une des revendications précédentes,
**caractérisé en ce que** l'appareil de commande (CU4, CU5) sécurisé est un appareil de commande de frein EBS, correspondant à « Electronic Braking System » (système de freinage électronique) et les appareils de commande (CU5, CU4) déplacés dans la partie séparée du système de bus de véhicule (B1') concernent au moins un appareil de commande de système d'assistance au conducteur (CU5) ou un appareil de commande de système de détection d'environnement auquel est raccordé au moins un capteur de détection d'environnement (SU1).

7. Appareil de commande électronique, comportant une première interface de communication (IT1) par l'intermédiaire de laquelle l'appareil de commande (CU4, CU5) peut être raccordé à une première partie d'un système de bus de véhicule (B1) filaire pour l'échange de messages, **caractérisé en ce que** l'appareil de commande (CU4, CU5) présente au moins une interface de communication (IT2) supplémentaire à laquelle peut être raccordée une partie séparée du système de bus de véhicule (B1'), dans lequel l'appareil de commande (CU4, CU5) est pourvu d'une fonction de passerelle et d'un équipement de sécurité qui remplit au moins la fonction d'un pare-feu (FW), dans le but de repousser des attaques provenant de la première partie du système de bus de véhicule (B1) sur l'un des appareils de commande (CU5, CU4) dans la partie séparée du système de bus de véhicule (B1'), dans lequel l'interface de communication (IT1) de l'appareil de commande (CU4, CU5) sécurisé est une interface de communication de bus CAN (IT1) sécurisée qui est conçue de telle sorte qu'elle peut repousser les attaques de messages infiltrés de la part d'un appareil de commande manipulé dans la première partie du système de bus de véhicule (B1).

8. Appareil de commande électronique selon la revendication 7, **caractérisé en ce que** l'équipement de sécurité (SE) concerne en outre un équipement logiciel qui permet la fonction d'un processus de démarrage sécurisé.

9. Appareil de commande électronique selon la revendication 7 ou 8, **caractérisé en ce que** la fonction de passerelle (GWF) de l'appareil de commande (CU4, CU5) se rapporte au routage des messages entre les abonnés dans la première partie du système de bus de véhicule (B1') et la partie séparée de celui-ci.

10. Appareil de commande électronique selon l'une des revendications 7 à 9, dans lequel la première interface de communication (IT1) et au moins une interface de communication (IT2) supplémentaire correspondent à une interface de communication de bus CAN, correspondant à réseau local de commande (Controller Area Network), en particulier dans la variante selon la norme SAE J1939.

11. Appareil de commande électronique selon la revendication 10, **caractérisé en ce que** l'interface de communication de bus CAN (IT1) pour le raccordement à la première partie du système de bus de véhicule (B1) est équipée d'un émetteur-récepteur CAN (120) sécurisé ou est pourvue d'une pile de logiciels qui est conçue pour la communication embarquée sécurisée, SecOC, qui peut repousser des attaques de messages infiltrés de la part d'un appareil de commande manipulé dans la première partie du système de bus de véhicule (B1).

12. Appareil de commande électronique selon la revendication 10 ou 11, **caractérisé en ce que** l'équipement de sécurité (SE) présente en outre une fonction pour l'authentification basée sur un certificat d'un testeur de diagnostic (DT) externe raccordé à un appareil de commande ou à un appareil passerelle (PU1) de la première partie du système de bus de véhicule (B1).

13. Appareil de commande électronique selon la revendication 12, **caractérisé en ce que** l'équipement de sécurité (SE) concerne un module HSM (HSM), correspondant à module de sécurité matériel (Hardware Security Module), pour assurer une authentification sécurisée d'au moins le testeur de diagnostic (DT) externe raccordé à un appareil de commande ou à un appareil passerelle (PU1) de la première partie du système de bus de véhicule (B1).

14. Appareil de commande électronique selon l'une des revendications 7 à 13, **caractérisé en ce que** l'équipement de sécurité (SE) présente en outre la fonction d'un appareil de commande de client de diagnostic pour l'authentification par clé de récupération (Seed-Key) d'un appareil de commande (CU4, CU5) raccordé à la partie séparée du système de bus de véhicule (B1') en ce qui concerne l'exécution de fonctions de diagnostic qui sont appelées par la communication avec le testeur de diagnostic (DT) externe vérifié par certificat.

15. Appareil de commande électronique selon l'une des revendications 7 à 14, **caractérisé en ce que** l'équipement de sécurité (SE) présente en outre la fonction de blocage d'instructions de diagnostic déterminées, considérées comme dangereuses, provenant du testeur de diagnostic (DT) externe et adressées à l'appareil de commande (CU5, CU4) à tester dans la partie séparée du système de bus de véhicule (B1'), en particulier en ce qui concerne la lecture et l'écriture de zones de mémoire allouées pour l'exécution de programmes informatiques ou pour la mémorisation permanente de programmes informatiques dans des zones de mémoire non volatiles.

16. Appareil de commande électronique selon l'une des revendications 7 à 15, **caractérisé en ce que** l'équipement de sécurité (SE) présente en outre la fonction de vérification des instructions de diagnostic entrantes, individuellement ou par groupe, en effectuant respectivement une nouvelle authentification du testeur de diagnostic (DT) externe avant de transmettre l'instruction de diagnostic concernée à l'appareil de commande à tester dans la partie séparée du système de bus de véhicule.

17. Appareil de commande électronique selon l'une des revendications 7 à 16, dans lequel l'équipement de sécurité présente en outre la fonction d'un processus de mise à jour logicielle sécurisé au cours duquel les programmes informatiques mémorisés dans la zone de mémoire non volatile sont échangés.

18. Appareil de commande électronique selon l'une des revendications 7 à 17, dans lequel l'appareil de commande électronique (CU4) est un appareil de commande de freinage EBS, correspondant à système de freinage électronique « Electronic Braking System » ou un appareil de commande (CU5) pour un système de régulation de distance ou est un appareil de commande pour un système de conduite automatique.

19. Véhicule comportant une unité d'entraînement (24) et un système de frein comportant un appareil de commande électronique (CU4), **caractérisé en ce que** le véhicule (20) présente un dispositif selon l'une des revendications 1 à 6.
